# EUROPEAN PATENT APPLICATION

(11) **EP 4 818 694 A1**
(43) Date of publication of application: **07.10.2026**
(21) Application number: 25186425.2
(22) Date of filing: 30.06.2025
(51) Int. Cl.: G01N 30/50, B01D 15/20

(54) **TWO-IN-ONE CHROMATOGRAPHY SYSTEMS FOR USE WITH SMALL VOLUME SAMPLES WITH AUTOMATED LIQUID HANDLERS**

(30) Priority: 04.04.2025 US 202519170391
(71) Applicant: Integrated Micro-Chromatography Systems, Inc., Irmo SC 29063 (US)
(72) Inventor: KATES, Patrick Alexander, Lexington, 29072 (US); COOK, Jordan Nicole, College Station, 77845 (US); ANDERSON, Gracie Kay, Boiling Springs, 29316 (US); LEE, Lim Andrew, Columbia, 29204 (US)
(74) Representative: J A Kemp LLP

(57) **Abstract**

The disclosure provides 2-in-1 chromatography systems that comprise two different chromatography resins, such as a combination of two different resins selected from affinity resins, ion exchange resins, size exclusion resins, mixed modal resins and hydrophobic interaction resins. Chromatography systems provided by the disclosure include pipette tips, spin chromatography columns, mini-chromatography columns and filter plates that are loaded with the two different resins. The chromatography systems of the disclosure are suitable for use with small volume samples and with automated liquid handlers. Kits comprising the 2-in-1 chromatography system are also provided. Methods of using the 2-in-1 chromatography system, for example to purify and/or concentrate a compound of interest, are also provided.

## Description

### Background of the Invention

Chromatography is a well-established technique for separating components in a mixed sample, such as to purify or concentrate a compound of interest or to exchange a compound of interest from one buffer into another buffer. Numerous chromatography approaches have been described in the art utilizing chromatography resins that interact with a compound of interest based on different physiochemical parameters, including but not limited to size, ionic charge, hydrophobicity, affinity for a target affixed on the chromatography resin, and combinations thereof.

Purification methodologies for a compound of interest often involve the sequential use of a combination of different chromatography columns to achieve optimum purification. Given that chromatography parameters such as buffers and pH can vary greatly between different types of chromatography approaches, the sequential use of different columns in a purification methodology allows for adjustment of chromatography parameters as needed between each sequential purification step.

More recently, a separation approach has been described, referred to as dual-mode chromatography (DMC), for depleting lipoproteins from plasma to thereby enrich for extracellular vesicles (Van Deun et al. (2020) Adv. Biosyst. 4:e1900310). In DMC as described by Van Deun et al., two different resins were combined in a single chromatography column, a size exclusion resin to remove high density lipoproteins and a cation exchange resin to remove positively-charged lipoproteins. The DMC column was prepared by first stacking a 2 mL resin bed of the ion exchange resin, followed by layering of a 10 mL resin bed of Sepharose CL-4B size exclusion resin on top of the ion exchange resin, for a total volume of 12 mL for the two resin beds.

The DMC approach was also used by Ter-Ovanesyan et al. to remove both lipoproteins and free proteins from plasma to improve isolation of extracellular vesicles (Ter-Ovanesyan et al. (2023) eLife 12:e86394). Ter-Ovanesyan et al. used Sepharose CL-6B as the size exclusion resin in the DMC column but otherwise used the same design described in Van Deun et al. Thus, the DMC column of Ter-Ovnesyan et al. was composed of a 2 mL resin bed of ion exchange resin, with a 10 mL resin bed of Sepharose CL-6B size exclusion resin on top of the ion exchange resin, for a total volume of 12 mL for the two resin beds. Ter-Ovanesyan et al. also describe a Tri-Mode Chromatography (TMC) column that added a multimodal chromatography resin (Capto Core 700) to the ion exchange resin in the bottom layer.

While the DMC and TMC columns and approaches described in Van Deun et al. and Ter-Ovanesyan et al. showed promise for the intended use described by the authors, the columns utilize a large resin bed volume (at least 12 ml), which may not be effective for use with small volume and/or low concentration samples, nor are the columns suitable for use with automated liquid handlers. Furthermore, the DMC and TMC columns and approaches of Van Deun et al. and Ter-Ovanesyan et al. have only been demonstrated to be effective for enrichment of extracellular vesicles from plasma and it is unclear if they can be applied to other biological targets or compounds of interest.

Thus, there remains a need in the art for additional chromatography approaches, particularly those that can be used with small volume and/or low concentration samples and that are suitable for automation.

### Summary of the Invention

The disclosure provides chromatography devices, referred to herein as 2-in-1 chromatography systems, that combine two different chromatography resins in a single housing. Non-limiting examples of 2-in-1 chromatography systems of the disclosure include pipette tips, spin chromatography columns, mini-chromatography columns and filter plates, wherein the housing of the device is loaded with the two different resins as well as one or more filters or membranes positioned in the housing relative to the resins. The 2-in-1 chromatography systems of the disclosure are suitable for use with small volume and/or low concentration samples and are suitable for automation, such as use with automated liquid handlers. Moreover, the 2-in-1 chromatography systems of the disclosure allow for efficient and high yield recovery of a compound of interest while providing shorter purification times as compared to use of sequential column chromatography.

Accordingly, in one aspect, the disclosure pertains to a 2-in-1 chromatography system comprising:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1;
wherein CR1 and CR2 each independently comprise a resin bed having a volume of 10-2000 µL; and
wherein CR1 and CR2 are different resins.
In embodiments, the system further comprises a first porous filter (PF1). In embodiments, PF1 is positioned between CR1 and CR2. In embodiments, PF1 is positioned above CR2 and beneath the upper opening. In embodiments, the system further comprises a second porous filter (PF2), wherein PF1 is positioned between CR1 and CR2 and PF2 is positioned above CR2 and beneath the upper opening.

In embodiments, the system comprises a pipette tip, a spin chromatography column or a mini-chromatography column or a filter plate. The types of and dimensions of the porous filters and lower permeable barriers used in the 2-in-1 chromatography system are chosen based on the format and dimensions of the device used in the 2-in-1 system, as described herein. For example, the columnar format systems (pipette tips, spin columns, mini-columns) typically use a different type of lower permeable barrier than the plate format systems, as described herein.

In certain embodiments, the 2-in-1 chromatography system of the disclosure uses a columnar format to house the components of the system. Accordingly, in one aspect, the disclosure pertains to a 2-in-1 chromatography system of the disclosure comprising:
a columnar housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2; and
a lower permeable barrier (LPB) positioned beneath CR1;
wherein CR1 and CR2 each independently comprise a resin bed having a volume of 10-2000 µL; and
wherein CR1 and CR2 are different resins.

In embodiments, the system further comprises a second porous filter (PF2) positioned above CR2 and beneath the upper opening. In embodiments, the system further comprises a space above CR2 and beneath the upper opening.

In embodiments, the columnar format of the 2-in-1 chromatography system is a pipette tip, a spin-chromatography column or a mini-chromatography column.

In embodiments using a 1 mL housing, the PF1 that is positioned between CR1 and CR2 has a diameter in a range of 0.17 to 0.19 inches. In embodiments, PF1 has a diameter of 0.18 inches. In embodiments, PF1 has a diameter in a range of 0.178 to 0.184 inches. In embodiments, PF1 has a diameter of 0.184 inches. Larger housings use larger diameter filters as described herein.

In embodiments, PF1 has a porosity of 60-80 microns. In embodiments, PF1 has a porosity of 80 microns. PF1 has a porosity of 60 microns.

In embodiments, PF1 has a thickness in a range of 0.05 to 0.10 inches. In embodiments, PF1 has a thickness of 0.055 inches. In embodiments, PF1 has a thickness of 0.10 inches.

In embodiments, PF1 is positioned 25 to 27 millimeters (mm) above the lower opening of the housing. In embodiments, PF1 is positioned 27 mm above the lower opening.

In embodiments, the housing is dimensioned to fit a liquid sample having a volume of 25-1000 µL. In embodiments, the housing is dimensioned to fit a liquid sample having a volume of 100 µL. In embodiments, the housing is dimensioned to fit a liquid sample having a volume of 150 µL. In embodiments, the housing has a total volume in a range of 0.5 to 2 mL (e.g., 1 mL).

In embodiments, CR1 and CR2 are resins comprised of a matrix independently selected from the group consisting of agarose, cross-linked dextrose, cellulose, polyacrylamide, polystyrene, Sepharose^{™} and Sephadex^{™}.

In embodiments, CR1 and CR2 are resins independently selected from the group consisting of size exclusion chromatography resins (e.g., buffer exchange resins), ion exchange chromatography resins, affinity chromatography resins, mixed modal resins and hydrophobic interaction resins.

In certain embodiments, CR2 is a cation exchange chromatography resin and CR1 is a size exclusion chromatography resin. In certain embodiments, CR2 is an affinity chromatography resin, such as a Protein A affinity resin or an immobilized metal affinity resin (e.g., Nickel resin), and CR1 is a size exclusion chromatography resin.

In embodiments, PF1 is composed of a material selected from the group consisting of polyethylene (PE), polypropylene (PP), cellulose, modified cellulose, nitrocellulose (NC), cellulose acetate, nylon, polystyrene, polyethersulfone and porous metal. In embodiments, PF2 is composed of a material selected from the group consisting of polyethylene (PE), polypropylene (PP), cellulose, modified cellulose, nitrocellulose (NC), cellulose acetate, nylon, polystyrene, polyethersulfone and porous metal. In embodiments, PF1 and PF2 are composed of the same material. In embodiments, PF1 and PF2 are composed of different materials.

In embodiments, the lower permeable barrier (LPB) is selected from the group consisting of filters, membranes, frits, screens, closures with a slit and closures with multiple slits.

In embodiments, the 2-in-1 chromatography system comprises a pipette tip comprising a distal end with an upper opening dimensioned to fit on a liquid dispenser. In embodiments, the liquid dispenser is a manual pipettor. In embodiments, the liquid dispenser is an automated liquid handler (ALH). In embodiments, the ALH is a Hamilton^{®} ALH. In embodiments, the ALH is a Tecan^{®} ALH.

In other embodiments, the 2-in-1 chromatography system of the disclosure uses a plate-type format for housing the components of the system. Accordingly, in another aspect the disclosure pertains to a 2-in-1 chromatography system that comprises a filter plate comprising one or more wells, wherein each well comprises:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1, wherein the LPB comprises a membrane having a porosity in a range of 1.2 to 25 microns;
wherein CR1 and CR2 each independently comprise a resin bed having a volume of 10-2000 µL; and
wherein CR1 and CR2 are different resins.
In embodiments, the total volume of the filter plate is 1 mL to 2 mL. In embodiments, the LPB comprises a 1.2 µm Supor^{®} membrane filter. In embodiments, the filter plate comprises round wells. In embodiments, the filter plate comprises square wells.

In embodiments, CR1 and CR2 are resins comprised of a matrix independently selected from the group consisting of agarose, cross-linked dextrose, cellulose, polyacrylamide, polystyrene, Sepharose^{™} and Sephadex^{™}.

In embodiments, CR1 and CR2 are resins independently selected from the group consisting of size exclusion chromatography resins, ion exchange chromatography resins, affinity chromatography resins, mixed modal resins and hydrophobic interaction resins.

In certain embodiments, CR2 is a cation exchange chromatography resin and CR1 is a size exclusion chromatography resin. In certain embodiments, CR2 is an affinity chromatography resin, such as a Protein A affinity resin or an immobilized metal affinity resin (e.g., Nickel resin), and CR1 is a size exclusion chromatography resin.

In yet another aspect, the 2-in-1 chromatography system of the disclosure pertains to a pipette tip that fits on a liquid dispenser. Accordingly, in another aspect the disclosure provides a 2-in-1 chromatography system comprising:
a pipette tip comprising:
a housing having a distal end with an upper opening dimensioned to fit on a liquid dispenser and a proximal end with a lower opening adapted for passage of a liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2, wherein PF1 has a diameter in a range of 0.17 to 0.19 inches and a porosity in a range of 60 to 80 microns; and
a lower permeable barrier (LPB) positioned beneath CR1;
wherein CR1 and CR2 each independently comprise a resin bed having a volume of 10-2000 µL; and
wherein CR1 and CR2 are different resins.
In embodiments, the system further comprises a second porous filter (PF2) positioned above CR2 and beneath the upper opening. In embodiments, the system further comprises a space above CR2 and beneath the upper opening.

In embodiments, PF1 has a diameter of 0.18 inches. In embodiments, PF1 has a diameter in a range of 0.178 to 0.184 inches. In embodiments, PF1 has a diameter of 0.184 inches.

In embodiments, PF1 has a porosity of 80 microns. PF1 has a porosity of 60 microns.

In embodiments, PF1 has a thickness in a range of 0.05 to 0.10 inches. In embodiments, PF1 has a thickness of 0.055 inches. In embodiments, PF1 has a thickness of 0.10 inches.

In embodiments, PF1 is positioned 25 to 27 millimeters (mm) above the lower opening. In embodiments, PF1 is positioned 27 mm above the lower opening.

In embodiments, the housing is dimensioned to fit a liquid sample having a volume of 25-1000 µL. In embodiments, the housing is dimensioned to fit a liquid sample having a volume of 100 µL. In embodiments, the housing is dimensioned to fit a liquid sample having a volume of 150 µL. In embodiments, the housing has a total volume in a range of 0.5 to 2 mL (e.g., 1 mL).

In embodiments, CR1 and CR2 are resins comprised of a matrix independently selected from the group consisting of agarose, cross-linked dextrose, cellulose, polyacrylamide, polystyrene, Sepharose^{™} and Sephadex^{™}.

In embodiments, CR1 and CR2 are resins independently selected from the group consisting of size exclusion chromatography resins, ion exchange chromatography resins, affinity chromatography resins, mixed modal resins and hydrophobic interaction resins.

In certain embodiments, CR2 is a cation exchange chromatography resin and CR1 is a size exclusion chromatography resin. In certain embodiments, CR2 is an affinity chromatography resin, such as a Protein A affinity resin or an immobilized metal affinity resin (e.g., Nickel resin), and CR1 is a size exclusion chromatography resin.

In embodiments, PF1 is composed of a material selected from the group consisting of polyethylene (PE), polypropylene (PP), cellulose, modified cellulose, nitrocellulose (NC), cellulose acetate, nylon, polystyrene, polyethersulfone and porous metal. In embodiments,
PF2 is composed of a material selected from the group consisting of polyethylene (PE), polypropylene (PP), cellulose, modified cellulose, nitrocellulose (NC), cellulose acetate, nylon, polystyrene, polyethersulfone and porous metal. In embodiments, PF1 and PF2 are composed of the same material. In embodiments, PF1 and PF2 are composed of different materials.

In embodiments, the lower permeable barrier (LPB) is selected from the group consisting of filters, membranes, frits, screens, closures with a slit and closures with multiple slits.

In embodiments, the liquid dispenser is a manual pipettor. In embodiments, the liquid dispenser is an automated liquid handler (ALH). In embodiments, the ALH is a Hamilton^{®} ALH. In embodiments, the ALH is a Tecan^{®} ALH.

In yet another aspect, the disclosure pertains to a kit comprising a 2-in-1 chromatography system of the disclosure, packaged with instructions for use. In embodiments, the kit comprises one or more pipette tips, one or more spin chromatography columns, one or more mini-chromatography columns, one or more filter plates, or combinations thereof. In embodiments, the kit comprises a plurality of pipette tips. In embodiments, the pipette tips are adapted for use with an automated liquid handler, such as a Hamilton^{®} ALH or a Tecan^{®} ALH.

In yet another aspect, the disclosure pertains to methods of using the 2-in-1 chromatography system of the disclosure, such as to purify a compound of interest, to concentration a compound of interest, to desalt a solution comprising a compound of interest or to buffer exchange a solution comprising a compound of interest. In embodiments, the method of using the 2-in-1 chromatography system of the disclosure comprises:
applying a liquid sample at the upper opening at the distal end of the housing;
passing the liquid sample through CR2 and CR1; and
eluting the liquid sample at the lower opening at the proximal end of the housing.
In embodiments, the method further comprises one or more washing steps prior to eluting the liquid sample. Additional details on methods of the disclosure are described herein.

### Brief Description of the Drawings

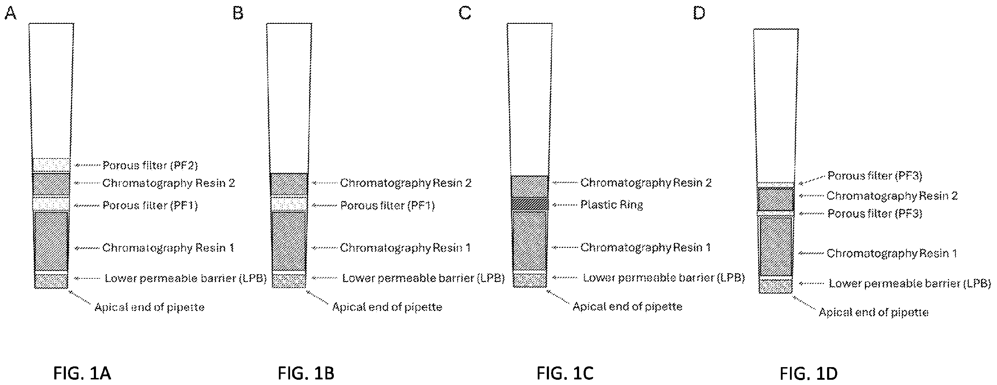

**FIG. 1A-1D** are schematic diagrams of different embodiments of the 2-in-1 chromatography systems of the disclosure in columnar formats. **FIG. 1A** is a schematic diagram of a pipette tip referred to as Format 1 in Example 1 comprising two porous filters (PF1 and PF2) sandwiching the upper chromatography resin (CR2) and a lower permeable barrier (LPB) positioned beneath the lower chromatography resin (CR1). **FIG. 1B** is a schematic diagram of a pipette tip referred to as Format 2 in Example 1 comprising PF1 positioned beneath CR2 and the LPB positioned beneath CR1, with no filter positioned above CR2. **FIG. 1C** is a schematic diagram of a pipette tip referred to as Format 3 in Example 1 comprising PF1 positioned beneath CR2 and the LPB positioned beneath CR1, with a plastic ring positioned between CR1 and CR2. **FIG. 1D** is a schematic diagram of a pipette tip referred to as Format 4 in Example 1 comprising porous filter PF3 sandwiching the upper chromatography resin (CR2), with the lower permeable barrier (LPB) positioned beneath the lower chromatography resin (CR1).

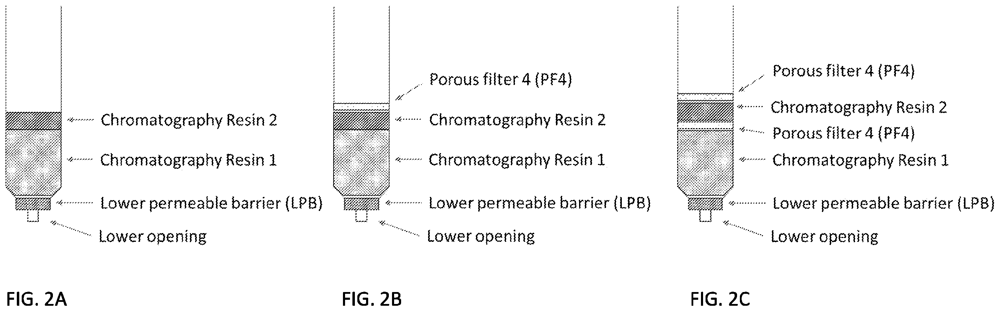

**FIG. 2A-2C** are schematic diagrams of different embodiments of the 2-in-1 chromatography systems of the disclosure in plate formats, showing the side view of the filter plate configuration. **FIG. 2A** illustrates a plate comprising the lower permeable barrier (LPB) positioned above the lower opening, the lower chromatography resin (CR1) positioned above the LPB and the upper chromatography resin (CR2) positioned above CR1. **FIG. 2B** illustrates a plate comprising the LPB positioned above the lower opening, CR1 positioned above the LPB, CR2 positioned above CR1, and a porous filter (PF4) positioned above CR2. **FIG. 2C** illustrates a plate comprising the LPB positioned above the lower opening, CR1 positioned above the LPB, CR2 positioned above CR1, and the porous filter PF4 positioned both between CR1 and CR2 and above CR2.
**FIG. 3** is a graph of a binding curve demonstrating the appropriate number of binding steps to bind green fluorescent protein (GFP) using the 2-in-1 chromatography pipette tip as described in Example 1.

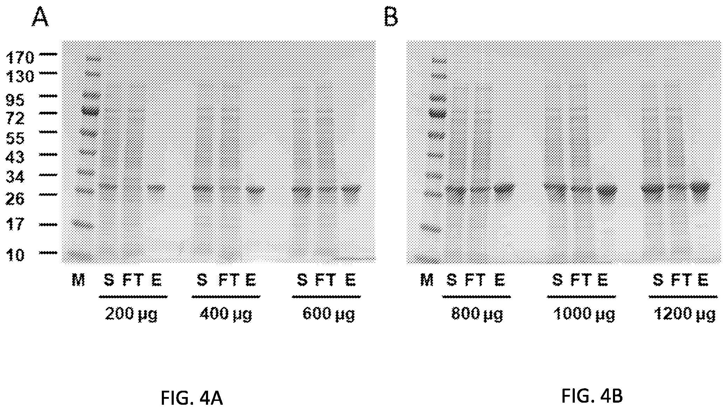

**FIG. 4A-4B** are photographs of SDS-PAGE gels showing purification of spiked amounts of his-tagged GFP from *E. coli* using the 2-in-1 chromatography pipette tip as described in Example 1. **FIG. 4A** shows purifications of 200-600 µg of GFP spiked into lysate (S = starting sample; FT = flow through; E = eluate; M = markers). **FIG. 4B** shows purifications of 800-1200 µg of GFP spiked into lysate.
**FIG. 5A-5C** are graphs showing the results for purification of GFP from cell lysate using the 2-in-1 chromatography pipette tip as described in Example 1. **FIG. 5A** shows resulting eluate volume. **FIG. 5B** shows percent recovery. **FIG. 5C** shows protein concentration in mg/mL.
**FIG. 6** is a bar graph comparing the protein purification results (in percent recovery) for use of the 2-in-1 chromatography pipette tip versus use of two sequential purifications with the same chromatography resins.
**FIG. 7** is a graph of a binding curve demonstrating the appropriate number of binding steps to bind polyclonal IgG using the 2-in-1 chromatography pipette tip as described in Example 2, for experiments using the Hamilton^{®} STAR automated liquid handler.
**FIG. 8** is a bar graph showing the results for purification of polyclonal IgG using the 2-in-1 chromatography pipette tip across different initial titers of antibody.
**FIG. 9** is a photograph of an SDS-PAGE gel showing three replicates of a purification of monoclonal antibody (mAb) from feedstock using the 2-in-1 chromatography pipette tip as described in Example 2 (M = markers; IF = initial feed; SS = spent sample; E = eluate).
**FIG. 10** is a bar graph of results for protein purification experiments using the 2-in-1 chromatography pipette tips with an automated liquid handler (Hamilton^{®} STAR), showing the program parameters that were optimized and their effect on percent recovery across various initial concentrations of protein.
**FIG. 11** is a bar graph of results for protein purification experiments using the 2-in-1 chromatography pipette tips with an automated liquid handler (Hamilton^{®} STAR), showing the program parameters that were optimized and their effect on eluate concentration change across various initial concentrations of protein.
**FIG. 12** is a graph of a binding curve demonstrating the appropriate number of binding steps to bind polyclonal IgG using the 2-in-1 chromatography pipette tip as described in Example 4, for experiments using the Tecan^{®} Fluent automated liquid handler.
**FIG. 13** is a bar graph showing the resulting recoveries of GFP for Configuration 1 of the 2-in-1 chromatography pipette tip using buffer exchange resin and cation exchange resin for concentrating and desalting samples on the Tecan^{®} Fluent automated liquid handler.
**FIG. 14** is a bar graph showing the resulting recoveries of GFP for Configuration 2 of the 2-in-1 chromatography pipette tip using buffer exchange resin and cation exchange resin for concentrating and desalting samples on the Tecan^{®} Fluent automated liquid handler.
**FIG. 15** is a bar graph showing the resulting recoveries of GFP for Configuration 3 of the 2-in-1 chromatography pipette tip using buffer exchange resin and cation exchange resin for concentrating and desalting samples on the Tecan^{®} Fluent automated liquid handler.
**FIG. 16A-16B** are graphs of binding curves demonstrating how many spin cycles are required using a 2-in-1 chromatography filter plate to bind a protein of interest based on various starting concentrations. **FIG. 16A** shows the binding curve when 25 µL of Nickel (Ni) resin was used. **FIG. 16B** shows the binding curve when 15 µL of Ni resin was used.
**FIG. 17A-17B** show results of 2-in-1 chromatography spin column experiments. **FIG. 17A** shows a graph of a binding curve demonstrating how many spin cycles are required to bind varying concentrations of protein using the 2-in-1 spin column. **FIG. 17B** is a bar graph showing the percent recovery of two different concentrations of GFP spiked into cell lysate using the 2-in-1 spin column chromatography.

### Detailed Description of the Invention

The chromatography devices of the disclosure, referred to herein as 2-in-1 chromatography systems, combine two different chromatography resins in a single housing, as well as one or more filters or membranes positioned in the single housing relative to the two resins. Non-limiting examples of different columnar embodiments of the 2-in-1 systems of the disclosure are illustrated schematically in **FIG 1A-1D****,** with the lower chromatography resin referred to as CR1, the upper chromatography resin referred to CR2, the porous filters referred to as PF1, PF2 and PF3 and the lower permeable barrier referred to as LPB. These formats, and the preparation and analysis thereof, are described in detail in Example 1. Columnar embodiments of the 2-in-1 system include pipette tips, spin chromatography columns and mini-chromatography columns. Other embodiments of the 2-in-1 system include filter plates. Non-limiting examples of different plate-based embodiments of the 2-in-1 systems of the disclosure are illustrated schematically in **FIG 2A-2C****.**

Use of pipette tip-based 2-in-1 chromatography systems to purify different types of proteins using two different automated liquid handlers (ALH) are described in detail in Examples 1-5. Purification and buffer exchange of a His-tagged protein using a Hamilton^{®} ALH and comparing four different formats of pipette tips is described in Example 1. Purification and buffer exchange of polyclonal immunoglobulins (Ig) and monoclonal antibodies (mAb) using a Hamilton^{®} ALH is described in Example 2. Concentration and buffer exchange of a His-tagged protein using a Hamilton^{®} ALH is described in Example 3. Purification and buffer exchange of polyclonal immunoglobulins (Ig) and monoclonal antibodies (mAb) using a Tecan^{®} ALH is described in Example 4. Concentration and buffer exchange of a His-tagged protein using a Tecan^{®} ALH is described in Example 5.

Use of a filter plate-based 2-in-1 chromatography system to purify and desalt a His-tagged protein is described in Example 6.

Use of a spin column-based 2-in-1 chromatography system to concentrate and desalt a His-tagged protein is described in Example 7.

Various aspects of the disclosure are described in further detail in the following subsections.

### I. 2-in-1 Chromatography Systems

The disclosure provides a 2-in-1 chromatography system is which two different chromatography resins, CR1 and CR2, are contained within a single housing of the system. In contrast to the DMC and TMC systems described by Van Deun et al. and Ter-Ovanesyan et al., which utilize a total resin bed volume of 12 mL or greater, the 2-in-1 chromatography systems of the disclosure utilize resin bed volumes of 10-2000 µL for each of CR1 and CR2, such that the maximal total resin bed volume for the system is 2000 µL (2 mL). Thus, the 2-in-1 chromatography system of the disclosure is suitable for use with smaller volume and/or lower concentration samples than prior art systems and for automation, such as use with automated liquid handlers.

Accordingly, in embodiments, the 2-in-1 chromatography system comprises:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1;
wherein CR1 and CR2 each independently comprise a resin bed having a volume of 10-2000 µL; and
wherein CR1 and CR2 are different resins.

In embodiments, the system further comprises a first porous filter (PF1) positioned between CR1 and CR2. In embodiments, the system further comprises a first porous filter (PF1) positioned above CR2 and beneath the lower opening. In embodiments, the system further comprises a first porous filter positioned between CR1 and CR2 and a second porous filter (PF2) positioned above CR2 and beneath the upper opening. In embodiments, the system further comprises a space above CR2 and beneath the upper opening.

In various embodiments, the 2-in-1 chromatography system comprises a pipette tip, a spin chromatography column, a mini-chromatography column or a filter plate. In certain embodiments, the 2-in-1 chromatography system of the disclosure uses a columnar format to house the components of the system, examples of which include pipette tips, spin chromatography columns and mini-chromatography columns. In other embodiments, the 2-in-1 chromatography system of the disclosure uses a plate format to house the components of the system, an example of which is a filter plate. Each of these embodiments is described in further detail below.

A 2-in-1 chromatography system of the present disclosure may comprise a combination of the systems, porous filters, lower permeable barriers, and chromatography resins as described herein to provide an optimized system for sample purification, sample concentration, sample desalting/and or sample buffer exchange.

### (A) Pipette Tips

A 2-in-1 chromatography system can be prepared using a pipette tip as the housing for the system and fitting CR1, CR2 and one or more filters or membranes within the pipette tip, as described in detail in Examples 1-5. In embodiments, the pipette tip comprises a total volume in a range of 0.1 mL to 5 mL. In embodiments, the pipette tip comprises a total volume in a range of 0.1 mL to 1.25 mL. In embodiments, the pipette tip comprises a total volume in a range of 0.1 mL to 1 mL. In embodiments, the pipette tip comprises a total volume in a range of 4 mL to 5 mL. In embodiments, the pipette tip comprises a total volume of 1 mL. In embodiments, the pipette tip comprises a total volume of 5 mL.

In embodiments, the 2-in-1 chromatography system of the disclosure comprises a pipette tip comprising:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2; and
a lower permeable barrier (LPB) positioned beneath CR1;
wherein CR1 and CR2 each independently comprise a resin bed having a volume of 10-2000 µL; and
wherein CR1 and CR2 are different resins.
In embodiments, the system further comprises a second porous filter (PF2) positioned above CR2 and beneath the upper opening. In embodiments, the system further comprises a space above CR2 and beneath the upper opening.

The diameter of the porous filter(s) is selected based on the dimensions of the housing. For example, for pipette tips with a 1 mL housing, in embodiments PF1 is positioned between CR1 and CR2 and has a diameter in a range of 0.17 to 0.19 inches. In embodiments, PF1 has a diameter of 0.18 inches. In embodiments, PF1 has a diameter in a range of 0.178 to 0.184 inches. In embodiments, PF1 has a diameter of 0.184 inches. For larger pipette tip housings, e.g., up to 5 mL, larger diameter filters are used, e.g., in a range of 5-9 mm.

In embodiments, PF1 has a porosity of 60-80 microns. In embodiments, PF1 has a porosity of 80 microns. In embodiments, PF1 has a porosity of 60 microns.

In embodiments, PF1 has a thickness in a range of 0.05 to 0.10 inches. In embodiments, PF1 has a thickness of 0.055 inches. In embodiments, PF1 has a thickness of 0.10 inches. In embodiments, PF1 has a thickness of from 0.05 inches to 0.11 inches, such as 0.06 inches, 0.07 inches or 0.08 inches. In embodiments, PF1 has a thickness of 0.1 inches.

In embodiments, PF1 is positioned 25 to 27 millimeters (mm) above the lower opening. In embodiments, PF1 is positioned 27 mm above the lower opening. In embodiments, PF1 is positioned 26 mm above the lower opening. In embodiments, PF1 is positioned 25 mm above the lower opening. In embodiments, PF2 is positioned from 1 mm to 5 mm, for example, 3 mm above PF1.

In embodiments, the housing is dimensioned to fit a liquid sample having a volume of 25-1000 µL. In embodiments, the housing is dimensioned to fit a liquid sample having a volume of 100 µL. In embodiments, the housing is dimensioned to fit a liquid sample having a volume of 150 µL. In embodiments, the housing has a total volume in a range of 0.5 to 2 mL (e.g., 1 mL).

In embodiments, the 2-in-1 chromatography system comprises a pipette tip comprising a distal end with an upper opening dimensioned to fit on a liquid dispenser. In embodiments, the liquid dispenser is a manual pipettor. In embodiments, the liquid dispenser is an automated liquid handler (ALH). In embodiments, the ALH is a Hamilton^{®} ALH. In embodiments, the ALH is a Tecan^{®} ALH.

In another embodiment, the 2-in-1 chromatography system comprises:
a pipette tip comprising:
a housing having a distal end with an upper opening dimensioned to fit on a liquid dispenser and a proximal end with a lower opening adapted for passage of a liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2, wherein PF1 has a diameter in a range of 0.17 to 0.19 inches and a porosity in a range of 60 to 80 microns; and
a lower permeable barrier (LPB) positioned beneath CR1;
wherein CR1 and CR2 each independently comprise a resin bed having a volume of 10-2000 µL; and
wherein CR1 and CR2 are different resins.

In some embodiments where the 2-in-1 chromatography system comprises a pipette tip, the pipette tip comprises a total volume of 1 ml, the LPB has an outer diameter of 0.13 inches and a height of 0.1 inches, the CR1 is a size exclusion chromatography resin having a wet mass of from 250 mg to 350 mg, the PF1 is an affinity chromatography resin having a volume of from 25 µL to 50 µL, the PF1 is positioned at from 25 to 27 mm above the lower opening of the pipette tip and the PF1 has a diameter of from 0.17 to 0.19 inches, for example 0.18 inches, a thickness of 0.1 inches and a porosity of 60 microns.

In some embodiments where the 2-in-1 chromatography system comprises a pipette tip, the pipette tip comprises a total volume of 1 ml, the LPB has an outer diameter of 0.13 inches and a height of 0.1 inches, the CR1 is a size exclusion chromatography resin having a wet mass of from 250 mg to 350 mg, the PF1 is an affinity chromatography resin having a volume of from 25 µL to 50 µL, the PF1 is positioned at from 25 to 27 mm above the lower opening of the pipette tip and has a diameter of from 0.17 to 0.19 inches, for example 0.18 inches, a thickness of 0.1 inches and a porosity of 60 microns; and the PF2 has a diameter of from 0.17-0.19 inches, for example 0.180 inches, a thickness of 0.1 inches and a porosity of 60 microns.

In some embodiments where the 2-in-1 chromatography system comprises a pipette tip, the pipette tip comprises a total volume of 1 ml, the LPB has an outer diameter of 0.13 inches and a height of 0.1 inches, the CR1 is a size exclusion chromatography resin having a wet mass of from 250 mg to 350 mg, and the PF1 is a plastic ring having an outer diameter of from 4 mm to 5 mm positioned at from 25 to 27 mm above the lower opening of the pipette tip.

In some embodiments where the 2-in-1 chromatography system comprises a pipette tip, the pipette tip comprises a total volume of 1 ml, the LPB has an outer diameter of 0.13 inches and a height of 0.1 inches, the CR1 is a size exclusion chromatography resin having a wet mass of from 250 mg to 350 mg, the PF1 is an affinity chromatography resin having a volume of from 25 µL to 75 µL, the PF1 is positioned at from 25 to 27 mm above the lower opening of the pipette tip and has a diameter of from 0.175 inches to 0.184 inches, for example 0.184 inches, a thickness of 0.055 inches and a porosity of 80 microns; and the PF2 has a diameter of from 0.175 inches to 0.184 inches, for example 0.184 inches, a thickness of 0.055 inches and a porosity of 80 microns.

General designs for use of pipette tips as housings for solid phase extraction column chromatography have been described in the art, non-limiting example of which include U.S.

Patent No. 6,566,145, U.S. Patent No. 9,733,169, U.S. Patent No. 11,161,107 and U.S. Patent No. 11,567,067, the entire contents of each of which are expressly incorporated herein by reference. Use of solid phase extraction pipette tips in combination with automated liquid handlers also has been described in the art, such as in U.S. Patent Application No. 18/392,791, filed December 23, 2023, the entire contents of which is expressly incorporated herein by reference.

Types of materials to use for the porous filters and the lower permeable barrier are described in further detail in subsection II.

Types of resins for use as CR1 and CR2 are described in further detail in subsection III.

### (B) Spin Chromatography Columns

A 2-in-1 chromatography system can be prepared using a spin chromatography column as the housing for the system and fitting the CR1, CR2, PF1, PF2 and LPB components within the column housing, as described in detail in Example 7. Use of a spin column-based system to concentrate and desalt a His-tagged protein is also described in detail in Example 7.

The format of the spin column-based system is very similar to that of the pipette-based system described in subsection IA above, except that rather than the system being adapted to fit onto a liquid dispenser, the system is adapted for use in centrifuge-assisted spin chromatography.

Accordingly, in embodiments, the disclosure pertains to a 2-in-1 chromatography system comprising a spin chromatography column comprising:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2; and
a lower permeable barrier (LPB) positioned beneath CR1;
wherein CR1 and CR2 each independently comprise a resin bed having a volume of 10-2000 µL; and
wherein CR1 and CR2 are different resins.
In embodiments, the system further comprises a second porous filter (PF2) positioned above CR2 and beneath the upper opening. In embodiments, the system further comprises a space above CR2 and beneath the upper opening.

The diameter of the porous filter(s) is selected based on the dimensions of the housing. For example, for spin columns with a 1 mL housing, in embodiments PF1 is positioned between CR1 and CR2 and has a diameter in a range of 0.17 to 0.19 inches. In embodiments, PF1 has a diameter of 0.18 inches. In embodiments, PF1 has a diameter in a range of 0.178 to 0.184 inches. In embodiments, PF1 has a diameter of 0.184 inches. For larger spin column housings, e.g., up to 5 mL, larger diameter filters are used, e.g., in a range of 5-9 mm.

In embodiments, PF1 has a porosity of 60-80 microns. In embodiments, PF1 has a porosity of 80 microns. PF1 has a porosity of 60 microns.

In embodiments, PF1 has a thickness in a range of 0.05 to 0.10 inches. In embodiments, PF1 has a thickness of 0.055 inches. In embodiments, PF1 has a thickness of 0.10 inches.

In embodiments, PF1 is positioned 25 to 27 millimeters (mm) above the lower opening. In embodiments, PF1 is positioned 27 mm above the lower opening. In embodiments, PF2 is positioned from 1 mm to 5 mm, for example, 3 mm above PF1.

In embodiments, the housing is dimensioned to fit a liquid sample having a volume of 25-1000 µL. In embodiments, the housing is dimensioned to fit a liquid sample having a volume of 100 µL. In embodiments, the housing is dimensioned to fit a liquid sample having a volume of 150 µL. In embodiments, the housing has a volume in a range of 0.5 to 2 mL (e.g., 1 mL).

Spin column designs are commercially available in the art (e.g., from ThermoFisher Scientific, Cytiva Life Sciences, Sartorius) and can be adapted for use in the 2-in-1 chromatography systems of the disclosure as described herein.

Types of materials to use for the porous filters and the lower permeable barrier are described in further detail in subsection II.

Types of resins for use as CR1 and CR2 are described in further detail in subsection III.

In some embodiments where the 2-in-1 chromatography system comprises a spin chromatography column the spin chromatography column comprises a total volume of between 0.5 and 2 mL, for example 1 mL, the LPB has an outer diameter of 0.13 inches and a height of 0.1 inches, the CR1 is a size exclusion chromatography resin having a wet mass of from 250 mg to 350 mg, the CR2 is an affinity chromatography resin having a volume of 25 µL to 50 µL, the PF1 is positioned at from 25 to 27 mm above the lower opening, and the PF1 has a diameter of between 0.17-0.19 inches, for example 0.18 inches, a thickness of 0.1 inches and a porosity of 60 microns.

In some embodiments where the 2-in-1 chromatography system comprises a spin chromatography column the spin chromatography column comprises a total volume of between 0.5 and 2 mL, for example 1 mL, the LPB has an outer diameter of 0.13 inches and a height of 0.1 inches, the CR1 is a size exclusion chromatography resin having a wet mass of from 250 mg to 350 mg, the CR2 is an affinity chromatography resin having a volume of 25 µL to 50 µL, the PF1 is positioned at from 25 to 27 mm above the lower opening, and has a diameter of between 0.17-0.19 inches, for example 0.18 inches, a thickness of 0.1 inches and a porosity of 60 microns, and a second porous filter (PF2) positioned within the housing above CR2 and beneath the upper opening, wherein PF2 has a diameter of between 0.17-0.19 inches, for example 0.18 inches, a thickness of 0.1 inches and a porosity of 60 microns.

In some embodiments where the 2-in-1 chromatography system comprises a spin chromatography column the spin chromatography column comprises a total volume of between 0.5 and 2 mL, for example 1 mL, the LPB has an outer diameter of 0.13 inches and a height of 0.1 inches, the CR1 is a size exclusion chromatography resin having a wet mass of from 250 mg to 350 mg, the CR2 is an affinity chromatography resin having a volume of 25 µL to 50 µL, and the PF1 is a plastic ring having an outer diameter of between 4-5 mm positioned from 25-27 mm above the lower opening.

In some embodiments where the 2-in-1 chromatography system comprises a spin chromatography column the spin chromatography column comprises a total volume of between 0.5 and 2 mL, for example 1 mL, the LPB has an outer diameter of 0.13 inches and a height of 0.1 inches, the CR1 is a size exclusion chromatography resin having a wet mass of from 250 mg to 350 mg, the CR2 is an affinity chromatography resin having a volume of 25 µL to 50 µL, the PF1 is positioned at from 25 to 27 mm above the lower opening, and has a diameter of between 0.175-0.184 inches, for example 0.184 inches, a thickness of 0.055 inches and a porosity of 80 microns, and a second porous filter (PF2) positioned within the housing above CR2 and beneath the upper opening, wherein PF2 has a diameter of between 0.175-0.184 inches, for example 0.184 inches, a thickness of 0.055 inches and a porosity of 80 microns.

### (C) Mini-Chromatography Columns

A 2-in-1 chromatography system can be prepared using a mini-chromatography column as the housing for the system and fitting the CR1, CR2, PF1, PF2 and LPB components within the column housing. The format of the mini-chromatography column-based system is very similar to that of the pipette-based system described in subsection IA above, except that rather than the system being adapted to fit onto a liquid dispenser, the system is adapted for use in a mini-chromatography format. As used herein, a "mini-chromatography" column is intended to refer to a column with a housing that is 5 mL or less and that uses total resin volumes of no greater than 4.0 mL and more typically 1.0 mL or less.

Accordingly, in embodiments, the disclosure pertains to a 2-in-1 chromatography system comprising a mini-chromatography column comprising:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2; and
a lower permeable barrier (LPB) positioned beneath CR1;
wherein CR1 and CR2 each independently comprise a resin bed having a volume of 10-2000 µL; and
wherein CR1 and CR2 are different resins.
In embodiments, the system further comprises a second porous filter (PF2) positioned above CR2 and beneath the upper opening. In embodiments, the system further comprises a space above CR2 and beneath the upper opening.

The diameter of the porous filter(s) is selected based on the dimensions of the housing. For example, for mini-columns with a 1 mL housing, in embodiments PF1 is positioned between CR1 and CR2 and has a diameter in a range of 0.17 to 0.19 inches. In embodiments, PF1 has a diameter of 0.18 inches. In embodiments, PF1 has a diameter in a range of 0.178 to 0.184 inches. In embodiments, PF1 has a diameter of 0.184 inches. For larger mini-column housings, e.g., up to 5 mL, larger diameter filters are used, e.g., in a range of 5-9 mm.

In embodiments, PF1 has a porosity of 60-80 microns. In embodiments, PF1 has a porosity of 80 microns. PF1 has a porosity of 60 microns.

In embodiments, PF1 has a thickness in a range of 0.05 to 0.10 inches. In embodiments, PF1 has a thickness of 0.055 inches. In embodiments, PF1 has a thickness of 0.10 inches.

In embodiments, PF1 is positioned 25 to 27 millimeters (mm) above the lower opening. In embodiments, PF1 is positioned 27 mm above the lower opening. In embodiments, PF2 is positioned from 1 mm to 5 mm, for example, 3 mm above PF1.

In embodiments, the housing is dimensioned to fit a liquid sample having a volume of 25-1000 µL. In embodiments, the housing is dimensioned to fit a liquid sample having a volume of 100 µL. In embodiments, the housing is dimensioned to fit a liquid sample having a volume of 150 µL. In embodiments, the housing has a volume in a range of 0.5 to 2 mL (e.g., 1 mL).

Mini-chromatography column designs are commercially available in the art (e.g., from ThermoFisher Scientific, Cytiva Life Sciences, Sartorius) and can be adapted for use in the 2-in-1 chromatography systems of the disclosure as described herein.

Types of materials to use for the porous filters and the lower permeable barrier are described in further detail in subsection II.

Types of resins for use as CR1 and CR2 are described in further detail in subsection III.

### (D) Filter Plates

In embodiments, a 2-in-1 chromatography system of the disclosure uses a plate-type format for housing the components of the system, such as a filter plate comprising one or more wells. Non-limiting embodiments of plate-type formats are illustrated schematically in **FIG. 2A-****2C.** Preparation of a filter plate-based 2-in-1 chromatography system and use thereof to purify and desalt a His-tagged protein is described in detail in Example 6. In the filter plate-based system, the upper resin (CR2) is loaded above the lower resin (CR1) and a lower permeable barrier having a porosity in a range of 1.2 to 25 microns is positioned beneath the lower resin.

Accordingly, in another embodiment, the 2-in-1 chromatography system of the disclosure comprises a filter plate comprising one or more wells, wherein each well comprises:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1, wherein the LPB comprises a membrane having a porosity in a range of 1.2 to 25 microns;
wherein CR1 and CR2 each independently comprise a resin bed having a volume of 10-2000 µL; and
wherein CR1 and CR2 are different resins.

In embodiments, a porous filter (PF) is positioned above CR2. In embodiments, a first porous filter (PF1) is positioned between CR1 and CR2 and a second porous filter (PF2) is positioned above CR2.

In embodiments, the total volume of the filter plate is 1 mL to 2 mL. In embodiments, the LPB comprises a 1.2 µm Supor^{®} membrane filter.

In embodiments, the filter plate comprises round wells. In embodiments, the filter plate comprises square wells. In embodiments, the filter plate comprises 96 wells.

In embodiments that use one or more porous filters, the diameter of the porous filter(s) is selected based on the dimensions of the housing. Thus, for plate formats, filters dimensioned to fit the plate wells are used, such as 7.5-8.5 mm round or square filters for round or square wells, respectively.

Filter plate designs are commercially available in the art (e.g., from ThermoFisher Scientific, Sigma Aldrich, Agilent Technologies) and can be adapted for use in the 2-in-1 chromatography systems of the disclosure as described herein.

Types of materials to use for the lower permeable barrier (LPB) are described in further detail in subsection II.

In some embodiments the LPB is a bottom membrane of the filter plate. The LPB may serve both a permeable barrier function and a filter function. Types of resins for use as CR1 and CR2 are described in further detail in subsection III.

In some embodiments, where the 2-in-1 chromatography system comprises a filter plate, the CR1 is a size exclusion chromatography resin having a wet mass of between 100-190 mg and the CR2 is an affinity chromatography resin having a volume of from 15 µL to 25 µL.

In some embodiments, where the 2-in-1 chromatography system comprises a filter plate, the CR1 is a size exclusion chromatography resin having a wet mass of between 100-190 mg, the CR2 is an affinity chromatography resin having a volume of from 15 µL to 25 µL, and a first porous filter is positioned within the housing above CR2 and beneath the upper opening, wherein the first porous filter has a diameter of between 7.5-8.5mm.
In some embodiments, where the 2-in-1 chromatography system comprises a filter plate, the CR1 is a size exclusion chromatography resin having a wet mass of between 100-190 mg, the CR2 is an affinity chromatography resin having a volume of from 15 µL to 25 µL, a first porous filter is positioned within the housing above CR2 and beneath the upper opening, optionally wherein the first porous filter has a diameter of between 7.5-8.5mm, and a second porous filter positioned within the housing between CR1 and CR2, optionally wherein the second porous filter has a diameter of between 7.5-8.5mm.

The 2-in-1 chromatography systems of the disclosure can be prepared as described in detail in the Examples. For example, a 2-in-1 system can be prepared by methods involving placing the first resin (CR1) within the housing having a lower permeable barrier (LPB), positioning a first filter (PF1) on top of the first resin (CR1) and then layering the second resin (CR2) on top of the first filter (PF1), followed by optionally positioning a second filter (PF2) on top of the second resin (CR2). Methods of using the 2-in-1 chromatography systems of the disclosure, such as to purify and/or concentrate a sample, to desalt a sample or to buffer exchange a sample, are described in detail in the Examples and in subsection VI.

### II. Porous Filters (PF) and Lower Permeable Barriers (LPB)

The 2-in-1 chromatography system of the disclosure comprises at least one porous filter or membrane positioned in the housing as described in detail in subsection I. The system comprises a lower permeable barrier (LPB) that is positioned above the lower opening of the system, as illustrated schematically in **FIG. 1A-D**for columnar formats and in **FIG. 2A-C** for plate formats. Additionally, depending on the type and configuration of the system, it can further comprise a first porous filter and optionally a second porous filter.

For example, for columnar formats, as illustrated in the embodiment of **FIG. 1B****,** a first porous filter, referred to as PF1 in the figure, can be positioned between CR1 and CR2. In the embodiment illustrated in **FIG. 1A****,** a second porous filter, referred to as PF2 in the figure, is positioned above CR2 and beneath the upper opening of the housing. The embodiment illustrated in **FIG. 1D** similarly has a first filter positioned between CR1 and CR2 and a second filter positioned above CR2 (with both filters labeled PF3 in the figure).

Also, as exemplary embodiments, for plate formats, as illustrated in the embodiment of **FIG. 2B****,** a first porous filter, referred to as PF4 in the figure to distinguish it from the columnar formats, can be positioned above CR2. In the embodiment of **FIG. 2C****,** a first porous filter is positioned between CR1 and CR2 and a second porous filter is positioned above CR2 (with both filters labeled PF4 in the figure).

In embodiments, the first porous filter (generally referred to herein as PF1), if present, is composed of a material selected from the group consisting of polyethylene (PE), polypropylene (PP), cellulose, modified cellulose, nitrocellulose (NC), cellulose acetate, nylon, polystyrene, polyethersulfone and porous metal. In an embodiment, PF1 is composed of polyethylene. In an embodiment, PF1 is composed of polypropylene. In an embodiment, PF1 is composed of cellulose. In an embodiment, PF1 is composed of modified cellulose. In an embodiment, PF1 is composed of nitrocellulose. In an embodiment, PF1 is composed of cellulose acetate. In an embodiment, PF1 is composed of nylon. In an embodiment, PF1 is composed of polystyrene. In an embodiment, PF1 is composed of polyethersulfone. In an embodiment, PF1 is composed of porous metal.

In embodiments, the second porous filter (generally referred to herein as PF2) is composed of a material selected from the group consisting of polyethylene (PE), polypropylene (PP), cellulose, modified cellulose, nitrocellulose (NC), cellulose acetate, nylon, polystyrene, polyethersulfone and porous metal. In an embodiment, PF2 is composed of polyethylene. In an embodiment, PF2 is composed of polypropylene. In an embodiment, PF2 is composed of cellulose. In an embodiment, PF2 is composed of modified cellulose. In an embodiment, PF2 is composed of nitrocellulose. In an embodiment, PF2 is composed of cellulose acetate. In an embodiment, PF2 is composed of nylon. In an embodiment, PF2 is composed of polystyrene. In an embodiment, PF2 is composed of polyethersulfone. In an embodiment, PF2 is composed of porous metal.

In embodiments, PF1 and PF2 are composed of the same material. In embodiments, PF1 and PF2 are composed of different materials.

In embodiments, a plastic ring (PR) is used in place of the porous filter (PF1) positioned between CR1 and CR2, as illustrated schematically in **FIG. 1C** and tested experimentally in Example 1, Format 3. While use of the plastic ring between CR1 and CR2 resulted in lower recoveries than use of the filter, nevertheless the plastic ring represents an acceptable substitute (equivalent) of the porous filter and is intended to be encompassed by that term.

The plastic ring may have any suitable diameter provided it can function as a porous filter. The diameter of the plastic ring may be adjusted to fit the pipette, column or plate. The plastic ring may, for example, have an outer diameter of from 4 mm to 5 mm, such as 4.7mm. The plastic spacing ring may be positioned similarly to PF1, for example from 25 mm to 27 mm above the lower opening.

The lower permeable barrier (LPB) is positioned beneath CR1 and above the lower opening of the housing. In embodiments, the lower permeable barrier (LPB) is selected from the group consisting of filters, membranes, frits, screens, closures with a slit and closures with multiple slits. In embodiments, the type of LPB used in the columnar format of the 2-in-1 system is different from the type of LPB used in the plate format of the 2-in-1 system.

In embodiments, the LPB used for the columnar format system is referred to as LPB1 and serves only a permeable barrier function above the lower opening, not a filtering function. In embodiments, LPB1 is composed of polyethylene (PE), polypropylene (PP), cellulose, modified cellulose, nitrocellulose (NC), cellulose acetate, nylon, polystyrene, polyethersulfone or porous metal.

In embodiments, the LPB used for the plate format system is referred to as LPB2 and serves both a permeable barrier function above the lower opening and a filtering function, wherein LPB2 has a porosity in a range of 1.2 to 25 microns. In a preferred embodiment of the filter plate-based system, the LPB comprises a 1.2 µm Supor^{®} membrane filter.

The outer diameter and height of the LPB are selected based on the type of housing used in the 2-in-1 system, wherein the diameter and height are chosen such that the LPB fits above the lower opening of the housing. For example, in the columnar embodiments described in Example 1, a 1 mL pipette tip is used as the housing and the LPB has an outer diameter of 0.130 inches and a height of 0.10 inches. In another non-limiting example, a 5 mL columnar format (e.g., spin column or mini-column) is used as the housing and the LPB has an outer diameter of 4.25 mm and a height of 4 mm.

### III. Chromatography Resins (CR)

The 2-in-1 chromatography systems of the disclosure comprise two resins within the housing that are "different resins", referred to herein as chromatography resin 1 (CR1) and chromatography resin 2 (CR2). In the embodiments illustrated schematically in **FIG. 1A-1D** and **FIG. 2A-2C****,** CR2 is positioned within the housing above CR1. Thus, when a sample is applied through the upper opening at the distal end of the housing, the sample flows through CR2 first and then flows through CR1.

As used herein, the two resins (CR1 and CR2) are "different resins" when they have a different physiochemical basis for interaction with the sample, such as first resin that interacts with the sample based on an affinity interaction and a second resin that interacts with the sample based on an ionic interaction, or a first resin that interacts with the sample based on a hydrophobic interaction and a second resin that separates the sample based on size.

In embodiments, CR1 and CR2 are resins independently selected from the group consisting of size exclusion chromatography resins (also referred to in the art as buffer exchange resins), ion exchange chromatography resins, affinity chromatography resins, mixed modal resins and hydrophobic interaction resins.

In embodiments, CR1 and CR2 are resins comprised of a matrix independently selected from the group consisting of agarose, cross-linked dextrose, cellulose, polyacrylamide, polystyrene, Sepharose^{™} and Sephadex^{™}. Two resins can still be "different resins" from each other and yet use the same or very similar underlying matrix as long as the physiochemical basis for the interaction of each resin with the sample is different.

In embodiments, CR1 or CR2 is a size exclusion chromatography resin, such as a buffer exchange resin. In embodiments, the lower resin (CR1 in **FIG. 1A-1D** and **FIG. 2A-2C**) is a size exclusion chromatography resin (e.g., buffer exchange resin). In embodiments, the lower resin is a size exclusion chromatography resin and the upper resin is selected from the group consisting of ion exchange chromatography resins, affinity chromatography resins, mixed modal resins and hydrophobic interaction resins. Size exclusion chromatography resins comprise an inert resin, porous in nature, composed of a base material such as agarose, cellulose, dextran, polystyrene, polyacrylamide, polyacrylate, Sephadex^{™}, or Sepharose^{™}. Non-limiting examples of commercially available inert resins include: Sephadex^{™}, (cross-linked dextran epichlorohydrin), Bio-gel P (polyacrylamide), and Sepharose^{™} (agarose). In embodiments, the size exclusion chromatography resin is Bio-Gel P-6DG (BioRad).

Size exclusion chromatography pipette tips, known in the art as IMCStips^{®} size exclusion tips, are commercially available from IMCS (Irmo, SC). Non-limiting examples include SizeX₁₀₀ tips and SizeX₁₅₀ tips, each of which use a 1 mL (1000 µL) tip containing a size exclusion resin and which are suitable for 100 µl or 150 µl sample volumes, respectively. Accordingly, in embodiments, a 2-in-1 chromatography system of the disclosure comprises a size exclusion resin as one of the resins, e.g., the lower resin (CR1), wherein the size exclusion resin portion of the system is designed based on, or similar to, for example a SizeX₁₀₀ tip or a SizeX₁₅₀ tip.

In embodiments, CR1 or CR2 is an ion exchange chromatography resin. In embodiments, the upper resin (CR2 in **FIG. 1A-1D** and **FIG. 2A-2C**) is an ion exchange chromatography resin. In embodiments, the upper resin (CR2) is an ion exchange chromatography resin and the lower resin (CR1) is a size exclusion resin. Ion exchange chromatography resins are commercially available in the art and encompass anion exchange chromatography resins, which interact with a sample based on anionic interactions, and cationic exchange chromatography resins, which interact with a sample based on cationic interactions. Anion exchange resins, which comprise a basic group (e.g., R-NH3OH), include resins with trimethylammonium groups, resins with polyethylene amine groups and cholestyramine colestipol. Cation exchange resins, which comprise an acidic group (e.g., R-COOH or R-SO3H) include patiromer, sodium polystyrene sulfonate and sodium zirconium cyclosilicate. In embodiments, the cation exchange resin (e.g., used as the upper resin, C2) is Macro-Prep High S (BioRad).

In embodiments, CR1 or CR2 is an affinity chromatography resin. In embodiments, the upper resin (CR2) is an affinity chromatography resin. In embodiments, the upper resin is an affinity chromatography resin and the lower resin is a size exclusion resin. A wide variety of affinity chromatography resins are commercially available in the art. Non-limiting examples of target/resin interactions that can be utilized for affinity chromatography include: Immunoglobulin (Ig)/Protein A or Protein G; amino acid tag (e.g., polyHis)/metal ion (e.g., Nickel); Antigen/Antibody or Antibody/Antigen; Lectin/Polysaccharide; GST fusion protein/glutathione; and biotin fusion protein/avidin or streptavidin. In embodiments, the affinity chromatography resin is the nickel chelating agarose resin Ni Sepharose 6 Fast Flow (Cytiva Life Sciences). In embodiments, the affinity chromatography resin is the Protein A resin PrismA (Cytiva Life Sciences).

In embodiments, CR1 or CR2 is a mixed modal resin, also known in the art as a multimodal resin, which is a single resin that exploits more than one type of chromatographic separation technique. In embodiments, the upper resin (CR2) is a mixed modal resin. In embodiments, the upper resin is a mixed modal resin and the lower resin is a size exclusion resin. Mixed modal resins are commercially available in the art, a non-limiting example of which is Capto^{™} Core 400/700 (Cytiva Life Sciences), which is a multimodal anion exchange resin.

In embodiments, CR1 or CR2 is a hydrophobic interaction chromatography (HIC) resin. In embodiments, the upper resin (CR2) is a HIC resin. In embodiments, the upper resin is a HIC resin and the lower resin is a size exclusion resin. HIC resins are commercially available in the art, non-limiting examples of which include POROS^{®} Ethyl and POROS^{®} Benzyl (ThermoFisher Scientific), Sartobind^{®} Phenyl (Sartorius), and Butyl Sepharose 4 and Butyl Sepharose 6 (Cytiva Life Sciences).

In certain embodiments, the upper resin (CR2) is a cation exchange chromatography resin (e.g., Macro-Prep High S) and the lower resin (CR1) is a size exclusion chromatography resin (e.g., Bio-Gel P-6DG).

In certain embodiments, the upper resin (CR2) is an affinity chromatography resin and the lower resin (CR1) is a size exclusion chromatography resin (e.g., Bio-Gel P-6DG). In embodiments, the affinity resin is a Protein A affinity resin (e.g., PrismA). In embodiments, the affinity resin is an immobilized metal ion affinity resin (e.g., Nickel resin; Ni Sepharose 6 Fast Flow).

In embodiments, CR1 and CR2 each independently comprise a resin bed having a volume of 10-2000 µL. In embodiments, CR1 has a resin bed volume of 10 µL, 15 µL, 20 µL, 25 µL, 30 µL, 35 µL, 40 µL, 45 µL, 50 µL, 75 µL, 100 µL, 150 µL, 200 µL, 250 µL, 500 µL, 1000 µL or 2000 µL. In embodiments, CR2 has a resin bed volume of 10 µL, 15 µL, 20 µL, 25 µL, 30 µL, 35 µL, 40 µL, 45 µL, 50 µL, 75 µL, 100 µL, 150 µL, 200 µL, 250 µL, 500 µL, 1000 µL or 2000 µL. In embodiments, the resin bed volume of CR1 and CR2 are the same. In embodiments, the resin bed volume of CR1 and CR2 are different. In embodiments, the total resin bed volume (CR1 resin bed volume + CR2 resin bed volume) is in a range of 10-100 µL, 10-250 µL, 10-500 µL, 10-1000 µL, 100-500 µL, 10-1000 µL, 100-2000 µL, 50-500 µL, 50-1000 µL or 1000-2000 µL.

CR1 may, for example, have a volume of from 25 µL to 50 µL, or from 25 µL to 75 µL. CR2 may, for example, independently of CR1 have a volume of from 25 µL to 50 µL, or from 25 µL to 75 µL. In some embodiments, CR2 is an immobilized metal ion affinity resin having a volume of 25 µL or 50 µL. In some embodiments, CR2 is a protein A affinity resin having a volume of 25 µL or 50 µL. In some embodiments, CR2 is a cation exchange resin having a volume of 25 µL, 50 µL or 75 µL. In some embodiments, CR2 is an immobilized metal ion affinity resin having a volume of 25 µL or 50 µL, and CR1 is a size exclusion chromatography resin. In some embodiments, CR2 is a protein A affinity resin having a volume of 25 µL or 50 µL, and CR1 is a size exclusion chromatography resin. In some embodiments, CR2 is a cation exchange resin having a volume of 25 µL, 50 µL or 75 µL, and CR1 is a size exclusion chromatography resin.

In embodiments, where CR1 or CR2, typically CR1, is a size exclusion chromatography resin, CR1 or CR2, typically CR1, comprises a resin bed having a wet mass of from 100 mg to 350 mg, such as from 100 mg to 190 mg, from 250 mg to 350 mg, for example, 130 mg, 350 mg, 260 mg, 265 mg, or 260-265mg (e.g. 262.5 mg). The wet mass of a size exclusion chromatography resin bed refers to the mass of the swollen chromatography resin.

### IV. Liquid Dispensers

Certain embodiments of the 2-in-1 chromatography system of the disclosure are adapted for use with liquid dispensers, such as pipettors or automated pipetting systems. The pipette tip-based systems comprise a distal end with an upper opening dimensioned to fit on a liquid dispenser. In embodiments, the liquid dispenser is a manual pipettor. In embodiments, the liquid dispenser is an automated liquid handler (ALH).

In embodiments, the ALH is a Hamilton^{®} ALH, such as a Hamilton^{®} STAR ALH. Non-limiting exemplary uses of a 2-in-1 pipette tip system of the disclosure with a Hamilton^{®} STAR ALH are described in Examples 1-3. Non-limiting exemplary optimized parameters (volume, dispense rate, hold time) for use of the 2-in-1 pipette tip system with the Hamilton^{®} STAR ALH are shown in Table 1.

A non-limiting exemplary 2-in-1 pipette tip system for use with a Hamilton^{®} ALH (e.g., a Hamilton^{®} STAR ALH) is built using a Hamilton Robotics pipette tip, such as a 1 mL clear, wide-bore pipette tip, wherein the pipette tip is constructed with the following components and parameters:
(i) a lower permeable barrier (LPB), wherein the LPB has an outer diameter of 0.130 inches and a height of 0.10 inches and is placed at the apical opening of the tip;
(ii) chromatography resin 1 (CR1) (e.g., a buffer exchange resin) positioned above the LPB;
(iii) a first porous filter (PF1) positioned above CR1 and positioned at 25-27 mm above the apical opening of the pipette tip, wherein the PF1 has an outer diameter of 0.184 inches, a thickness of 0.055 inches and a porosity of 80 microns;
(iv) chromatography resin 2 (CR2) (e.g., an affinity resin, ion exchange resin, hydrophobic interaction resin or multi-modal resin) positioned above CR1 and PF1;
(v) a second porous filter (PF2) positioned above CR2, wherein PF2 is positioned 3 mm above PF1.

In embodiments, the ALH is a Tecan^{®} ALH, such as a Tecan^{®} Fluent ALH (e.g., Fluent 1080) or a Tecan^{®} EVO ALH. Non-limiting exemplary uses of a 2-in-1 pipette tip system of the disclosure with a Tecan^{®} Fluent ALH are described in Examples 4-5. Non-limiting exemplary optimized parameters (volume, dispense rate, hold time) for use of the 2-in-1 pipette tip system with the Tecan^{®} Fluent ALH are shown in Tables 2-5.

A non-limiting exemplary 2-in-1 pipette tip system for use with a Tecan^{®} ALH (e.g., a Tecan^{®} Fluent ALH) is built using a Tecan pipette tip, such as a 1 mL clear, wide-bore pipette tip, wherein the pipette tip is constructed with the following components and parameters:
(i) a lower permeable barrier (LPB), wherein the LPB has an outer diameter of 0.130 inches and a height of 0.10 inches and is placed at the apical opening of the tip;
(ii) chromatography resin 1 (CR1) (e.g., a buffer exchange resin) positioned above the LPB;
(iii) a first porous filter (PF1) positioned above CR1 and positioned at 25-27 mm above the apical opening of the pipette tip, wherein the PF1 has an outer diameter of 0.178 to 0.180 inches, a thickness of 0.055 inches and a porosity of 80 microns;
(iv) chromatography resin 2 (CR2) (e.g., an affinity resin, ion exchange resin, hydrophobic interaction resin or multi-modal resin) positioned above CR1 and PF1;
(v) a second porous filter (PF2) positioned above CR2, wherein PF2 is positioned 3 mm above PF1.

A 2-in-1 chromatography pipette tip system can be adapted for use with other ALH systems that are commercially available in the art, non-limiting examples of which include Dynamic Devices^{®} ALHs, such as a Lynx platform ALH (e.g., Lynx LM1200), Analytik Jena^{®} ALHs, Eppendorf^{®} ALHs and Opentrons^{®} ALHs. As described above and in Examples 1-5, a pipette tip adapted for use with the particular ALH of interest can be loaded with the relevant resins and filters for 2-in-1 chromatography, as described herein. Depending on the bore of the pipette tip used, the outer diameters of the porous filter(s) and lower permeable barrier are adjusted to achieve the desired fit within the pipette tip.

### V. Kits

In another aspect, the disclosure provides kits comprising a 2-in-1 chromatography system of the disclosure, in a package with instructions for using the system, such as for sample purification, sample concentration, sample desalting and/or sample buffer exchange.

In one embodiment, the 2-in-1 system contained in the kit comprises one or more pipette tips. In another embodiment, the 2-in-1 system contained in the kit comprises one or more spin chromatography columns. In another embodiment, the 2-in-1 system contained in the kit comprises one or more mini-chromatography columns. In another embodiment, the 2-in-1 system contained in the kit comprises one or more filter plates.

In an embodiment, the kit comprises a plurality of pipette tips, spin chromatography columns, mini-chromatography columns or filter plates.

In embodiments, the kit comprises a plurality of 2-in-1 chromatography pipette tips. In embodiments, the plurality of pipette tips are adapted for use with an automated liquid handler. In embodiments, the ALH is a Hamilton^{®} ALH (e.g., a Hamilton^{®} STAR ALH). In embodiments, the ALH is a Tecan^{®} ALH (e.g., a Tecan^{®} Fluent ALH). Non-limiting exemplary parameters for 2-in-1 chromatography pipette tips for use with ALHs are described in detail in subsection IV.

### VI. Methods of Use

In another aspect, the disclosure provides methods of using the 2-in-1 chromatography system of the disclosure, such as for sample purification, sample concentration, sample desalting and/or sample buffer exchange. Use of the chromatography system involves standard chromatography steps for loading a sample onto the system, passing the sample through the two resins (CR2 and CR1) and eluting the sample from the system. Accordingly, in embodiments, a method of the disclosure for using the 2-in-1 system comprises:
applying a liquid sample at the upper opening at the distal end of the housing of the system;
passing the liquid sample through CR2 and CR1 contained within the housing of the system; and
eluting the liquid sample at the lower opening at the proximal end of the housing of the system.

In embodiments, the method further comprises one or more washing steps prior to eluting the liquid sample. In embodiments, the method further comprises one or more equilibration steps prior to applying the liquid sample.

The steps of the method can be carried out, for example, manually (such as with a manual pipettor or with a gravity-fed mini-chromatography column), with an automated liquid handler (such as the Hamilton^{®} or Tecan^{®} ALHs described herein), or with a centrifuge-assisted system (such as the spin chromatography columns and filter plates described herein).

The specific parameters (e.g., buffers, pH, flow rates) to be used for the various chromatography steps (equilibration, loading/binding, washing, eluting) are influenced by a number of factors, non-limiting examples of which include the types of resins used for CR1 and CR2, the type of sample being applied and the type of 2-in-1 system used. Selection of the specific parameters for the various chromatography steps (equilibration, loading/binding, washing, eluting) is within the skill of the ordinary skilled artisan in view of the guidance provided herein, including in the Examples. As the general workflow for an affinity-based purification and a buffer exchange protocol are different, the 2-in-1 chromatography approach is mindful of the requirements of both for each step. The wash steps serve to both wash the affinity resin and to equilibrate the buffer exchange resin. Purifications are typically performed in a unidirectional manner with equilibration solution, sample, wash solutions, and elution solution loaded in through the top of the tip and onto either PF2 or the bare affinity resin bed. Where an automated liquid handler is used, liquid distributions and positive pressures can be controlled by adjusting the plungers of the automated liquid handler. Each individual step using the automated liquid handler (i.e. equilibration, binding, washing, or elution) encompasses transfer of liquid from a container to the top of the resin or PF2, extending the plunger prior to tip pick up, picking up the 2-in-1 chromatography tips, gradual displacement of the plunger over a measured distance to exert positive pressure on the tip, and ejection of the tip. Samples where the volumes exceed the available headspace in the housing (~550 µL) may be distributed in fractions (i.e. a 1.0 mL sample could be split into two passes of 500 µL). Subsequent binding steps may take into consideration that not all liquid may be aspirated and passage volumes may be reduced upon each further pass. Sample flow throughs may be measured after each pass to test for the availability of unbound protein and used to generate a binding curve. Each of the individual steps may be optimized for liquid class, with overall plunger volume and the speed at which the plunger dispenses being adjusted for pressure and complete removal of samples.

In embodiments, the one or more equilibration steps comprise applying an equilibration buffer at the upper opening at the distal end of the housing of the system, passing the equilibration buffer through CR2 and CR1 contained within the housing of the system and out of the lower opening at the proximal end of the housing. In embodiments the method comprises at least one equilibration step. In embodiments the method comprises one, two or three equilibration steps. In embodiments from 250 µL to 650 µL of equilibration buffer, such as 500 µL, is used in each of the one or more equilibration steps. Any suitable equilibration buffer may be used. The equilibration buffer may, for example, be 1 x PBS. The equilibration buffer may, for example, be 50 mM HEPES, 500 mM NaCl, pH 7.5, or 50 mM potassium acetate, 50 mM NaCl, pH 5.5.

In embodiments, the loading/binding steps comprise applying the sample at the upper opening at the distal end of the housing of the system, passing the sample through CR2 and CR1 contained within the housing of the system and out of the lower opening at the proximal end of the housing. In embodiments from 250 µL to 650 µL of sample, such as 500 µL, is used. After passing a bolus of sample through the system, time, for example from 30 to 120 seconds, such as 60 seconds, is allowed to allow clearance of the solution through the tip. The sample may be recycled through the tip multiple times, such as from 2 to 10 times, such as 3, 4, 5, 6, 7 or 8 times.

The passing of the liquid sample through the 2-in-1 system may be referred to a binding cycle. In embodiments, from 0.4 mL to 1 mL of liquid sample is used in each binding cycle. The total liquid sample may be divided into one or more fractions (typically fractions of from 250 µL to 650 µL, such as 500 µL) and dispensed in one or more dispense steps within each binding cycle. In embodiments, the method comprises at least one binding cycle. In embodiments, the method comprises to or more, such as three to ten binding cycles. In embodiments, the method comprises four, five, six seven or eight binding cycles.

In embodiments, the one or more wash steps comprise applying a wash buffer at the upper opening at the distal end of the housing of the system, passing the wash buffer through CR2 and CR1 contained within the housing of the system and out of the lower opening at the proximal end of the housing. In embodiments, the method comprises at least one wash step. In embodiments, the method comprises one, two or three wash steps. In embodiments, from 250 µL to 650 µL of wash buffer is used in each of the one or more wash steps. The total wash buffer may be divided into one or more fractions and dispensed in one or more dispense steps within each wash step. Any suitable wash buffer may be used. The wash buffer may be 1 x PBS. The wash buffer may be 50 mM HEPES, 500 mM NaCl, pH 7.5. The wash buffer may be 50 mM HEPES, 500 mM NaCl, 15 mM imidazole, pH 7.5. The wash buffer may be 50 mM potassium acetate, 50 mM NaCl, pH 5.5 buffer. In embodiments, each of the one or more wash steps may use the same wash buffer. In embodiments, each of the one or more wash steps may use a different wash buffer. In embodiments, the elution step comprises applying an elution buffer at the upper opening at the distal end of the housing of the system, passing the elution buffer through CR2 and CR1 contained within the housing of the system and out of the lower opening at the proximal end of the housing. In embodiments, from 100 µL to 300 µL of elution buffer is used. The elution buffer may be any elution buffer suitable for eluting a specific sample from a specific chromatography resin used. The elution buffer may be 500 mM HEPES, 500 mM NaCl, 500 mM imidazole pH 7.5. The elution buffer may be 0.1M sodium acetate pH 3. The elution buffer may be 50 mM potassium acetate, 2 M NaCl, pH 8.1. The elution buffer may be 50 mM sodium phosphate, 500 mM imidazole pH 8.0. In some embodiments, the elution step comprises a pre-elution dispense of the elution buffer and a subsequent further dispense of the elution buffer.

The present invention is further illustrated by the following examples, which should not be construed as further limiting. The contents of figures and all references, patents and published patent applications cited throughout this application are expressly incorporated herein by reference.

### EXAMPLES

### Example 1: Purification and Desalting of His₆-tagged Protein from Buffered Solutions and Cell Lysate using 2-in-1 Chromatography on a Hamilton^{®} STAR Automated Liquid Handling System

In this example, four different formats of 2-in-1 chromatography pipette tips were prepared and tested for purification of a his-tagged protein using an automated liquid handler (Hamilton^{®} STAR). The four different pipette tip formats are illustrated schematically in **FIG. 1A-1D****,** respectively.

All pipette tip formats contained two resins packed into one pipette tip and were used to purify a recombinant his-tagged protein from either bacterial cell lysate or buffered solution. The upper chromatography resin is referred to herein as CR2 and the lower chromatography resin is referred to herein as CR1. The resins used in these experiments were 25 µL of a nickel chelating agarose resin (Ni Sepharose 6 Fast Flow from Cytiva) (CR2) and 262.5 mg (wet mass) of an inert buffer exchange resin (swollen Bio-Gel P-6DG from Bio-Rad) (CR1). The formats varied based on the use of porous filters and compressions. All resins and filters were placed inside a common set up which included a Hamilton Robotics 1 mL clear, wide-bore pipette tip with a lower permeable barrier (LPB)(outer diameter: 0.130", height 0.10") placed at the apical orifice of the tip. Detailed liquid handling procedures used across these initial experiments are described in detail below for Format 4, which was determined to be the preferred format.

### Format 1

In the first format, a porous filter was placed on top of a swollen buffer exchange resin bed (CR1). This porous filter 1 (PF1) was 0.180" diameter and 0.1" thickness with 60 micron porosity. In this format, the resin beds were manually compressed to various heights (24-27) mm from the apical tip orifice. Additionally, the second chromatography component (CR2), 25 µL of a nickel chelating agarose resin (Ni), was layered on top of PF1. An additional porous filter (PF2) of the same composition was placed on top of the Ni resin bed. This format is illustrated schematically in **FIG. 1A****.**

The purification test was performed on a Hamilton STAR automated liquid handling system. Tips were loaded onto the system and used to purify recombinant his-tagged green fluorescent protein (GFP) from clarified *E. coli* cell lysate (B-PER lysis). In the case of cell lysate, 300 µg of GFP was spiked into a cell lysate solution containing 4 mg/mL of non-his-tagged protein. Samples were passed through the 2-in-1 tip in 500 µL boluses, with an additional 60 s of time added past full plunger dispense (600 µL) to allow clearance of solution through the tip. After four sample binding cycles (8 x 500 µL of solution recycled through the tip), solutions were twice washed in a PBS solution (1 mL). Bound material was then eluted into the buffer-exchange component of the tip using 150 µL of 1 x PBS, 500 mM imidazole, pH 7.4. Material was then fully eluted from the tip with the edition of chaser dispense volume of 200 µL. Recovery percentages of spiked material in cell lysate at PF1 placement heights of 25, 26, and 27 mm were 100.3 ± 9.7%, 89.6 ± 7.2%, and 87.6 ± 4.3%, respectively. In this case, compression of the PF1 to 24 mm produced too much back pressure for solutions to pass through the tip.

### Format 2

In the second format, the top (PF2) porous filter above the affinity resin was removed. This format is illustrated schematically in **FIG. 1B****.** This second format was created in two ways. In a first approach, this format was prepared the same as described above for Format 1, except no PF2 was placed on top of the Ni affinity resin (CR2). In the second approach, the buffer exchange resin (CR1) was spun down in a centrifuge at 500 xg for 1 minute prior to the insertion of the PF1 on top of the buffer exchange resin. No PF2 was placed on top of the affinity resin (CR2).

As placement of PF1 at 27 nm demonstrated the least backpressure when using Format 1, 27 nm was the preferred placement for Format 2. Similar to Format 1, known amounts of GFP were spiked into bacterial cell lysate (total protein concentration of 4 mg/mL). In this case, variable amounts of GFP (100, 174, 425, and 630 µg) were spiked into the bacterial cell lysate (n = 3). Purification was performed in the same manner as described for Format 1. The percent recoveries were as follows for 100, 174, 425, and 630 µg starting amounts: 71.5 ± 15.8 %, 80.2 ± 3.0 %, 59.9 ± 2.96 %, and 52.4 ± 7.5 %. The elution volume range averaged 94.7 µL ± 5.8 and ranged from 82.5-105.5 µL.

To test for differences in tip production (whether buffer exchange resin was spun down prior to PF1 insertion), tips that had either been centrifuged prior to PF1 insertion or had not been centrifuged prior to PF1 insertion were used to purify GFP that had been spiked into 1x PBS at either 376 µg/mL or 558 µg/mL (1 ml) (n=4). Average recovery for the tips not spun down were 77.7 ± 9.0% and 76.2 ± 13.3% for 376 and 558 µg, respectively. Average recovery for the tips that were spun down were 84.3 ± 3.8% and 76.3 ± 1.3% for 376 and 558 µg, respectively. Although the average percent recovery was not significantly different for the two production modes (*p*-value = 0.19 and 0.97 for 376 µg and 558 µg, respectively), final eluate volumes were noticeably different (109.7 ± 7.7 µL for non-spun tips and 137.5 ± 8.1 µL for spun tips).

### Format 3

In third format, the mid-filter PF1 was replaced with a plastic spacing ring at different positions (25-27 mm) from the apical orifice. This format is illustrated schematically in **FIG. 1C****.**

As with Formats 1 and 2, this format had the same lower permeable barrier (LPB) positioned at the apical orifice, and 262.5 mg (wet mass) of an inert buffer exchange resin (swollen Bio-Gel P-6DG from Bio-Rad)(CR1). The buffer exchange resin was spun down in a centrifuge at 500 x g for 1 minute, after which a plastic spacing ring with 4.7 mm outer diameter was placed at either 25, 26, or 27 mm from the apical orifice of the tip. Ni resin (CR2) was then layered on top of the spacing ring.

Similar to Format 1, known amounts of GFP were spiked into bacterial cell lysate (1.5 mg/mL). In this case, variable amounts of GFP (200, 400, 600, 800, 1000, and 1200 µg) were spiked into the bacterial cell lysate (*n*=8). Purification was performed in the same manner as described for Format 1. The percent recoveries were as follows for 200, 400, 600, 800, 1000, and 1200 µg starting amounts: 67.6 ± 11.1 %, 67.2 ± 11.2 %, 73.8 ± 10.0 %, 65.1 ± 4.0 %, 59.5 ± 5.5 %, and 61.7 ± 4.9 %. The elution volumes were 106.3 ± 13.1, 100.4 ± 7.7, 93.4 ± 8.2, 97.6 ± 7.4, 96.6 ± 11.4, and 104.1 ± 9.9 µL for 200, 400, 600, 800, 1000, and 1200 µg, respectively.

### Format 4

The design of Format 4 was similar to that of Format 1, with PF1 and PF2 positioned beneath and above CR2, respectively, except that the porous filters were of varied diameter (0.175-0.184"), a decreased thickness (0.055"), and a larger porosity of 80-microns. Additionally, each PFs were moved into place individually. One PF placement was placed at various distances (40-50 mm) from the open end of the tip. The Ni resin (CR2) was then layered on top of the first PF and a second PF was placed with an additional 1-5 mm of spacing depending on resin amount. This format is illustrated schematically in **FIG. 1D****.**

The specifications to build for Hamilton wide bore tips with one filter type, specified as PF3, were: 0.184" OD and 0.055" thickness with 80-micron porosity. The LPB was placed at the bottom end of the pipette, followed by buffer exchange resin (CR1) and first PF3 at 27 mm above the apical opening on the pipette. A second resin (e.g., affinity or ion exchange or multi-modal) is filled on top of the first PF3 and another PF3 is placed on top of the second resin 3 mm above the first PF3.

### Workflow

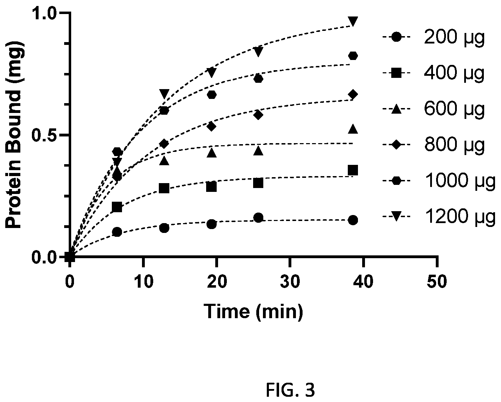

As the general workflow for an affinity-based purification and a buffer exchange protocol are different, a 2-in-1 chromatography approach needed to be mindful of the requirements of both for each step. The workflow followed an equilibration, bind, wash, elute protocol for the affinity resin (Ni, in this example) with care taken to make sure materials found in the equilibration and binding section would not become stuck in the buffer exchange resin. The wash steps served to both wash the affinity resin and to equilibrate the buffer exchange resin. Purifications were performed in a unidirectional manner with equilibration solution, sample, wash solutions, and elution solution loaded in through the top of the tip and onto either the top frit or the bare affinity resin bed. Liquid distributions and positive pressures were carefully controlled by adjusting the plungers of the automated liquid handler. Each individual step (i.e. equilibration, binding, washing, or elution) encompassed several steps; namely, transfer of liquid from a container to the top of the resin or internal frit, extending the plunger prior to tip pick up, picking up the 2-in-1 chromatography tips, gradual displacement of the plunger over a measured distance to exert positive pressure on the tip, and ejection of the tip. Samples where the volumes exceed the available headspace (~550 µL) were distributed in fractions (i.e. a 1.0 mL sample could be split into two passes of 500 µL). Subsequent binding steps took into consideration that not all liquid may be aspirated and passage volumes were reduced upon each further pass. Sample flow throughs were measured after each pass to test for the availability of unbound protein and used to generate a binding curve (**FIG. 3**). Each of the individual steps were optimized for liquid class, with overall plunger volume and the speed at which the plunger dispenses being adjusted for pressure and complete removal of samples. The viscosity of the sample was considered, as was sample lysis preparation. Use of detergents to lyse samples showed no negative impact on overall purity of sample as long as the lysate was cleared prior to loading.

Several liquid classes were tested for each step with the best performing liquid classes being detailed in **Table 1.**

**Table 1. Optimized parameters for 50 µL of affinity resin stacked with 262.5 mg of Bio-Rad 6PDG on the Hamilton STAR**

| **Step** | **Parameters** | | |
|---|---|---|---|
| | Volume (µL) | **Dispense Rate (µL/s)** | **Hold Time, s** |
| Blowout | 900 | 10 | 15 |
| Equilibration | 290 | 10 | 45 |
| Equilibration | 290 | 10 | 45 |
| Sample (x2) | 497 | 10 | 45 |
| Sample (x2) | 477 | 10 | 60 |
| Sample (x2) | 457 | 10 | 60 |
| Wash (x2) | 600 | 10 | 45 |
| Elution | 225 | --- | --- |
| Pre-Elution Dispense | 200 | 10 | 30 |
| Elution Dispense | 140 | 10 | 60 |

In this example, recombinant his₆-tagged green fluorescent protein (GFP) was expressed in *E. coli* in a standard manner and purified by FPLC. *E. coli* cultures containing empty plasmids were lysed using either B-PER^{™} Complete (Thermo Scientific) or more preferably via homogenization under high pressure such as with a Constant Systems CF2 cell disruptor. Previously purified GFP was spiked into the cell lysate at amounts totaling either 200, 400, 600, 800, 1000, or 1200 µg in 1 mL of culture. The spiked cultures were then purified using the 2-in-1 chromatography tips on a Hamilton STAR automated liquid handler.

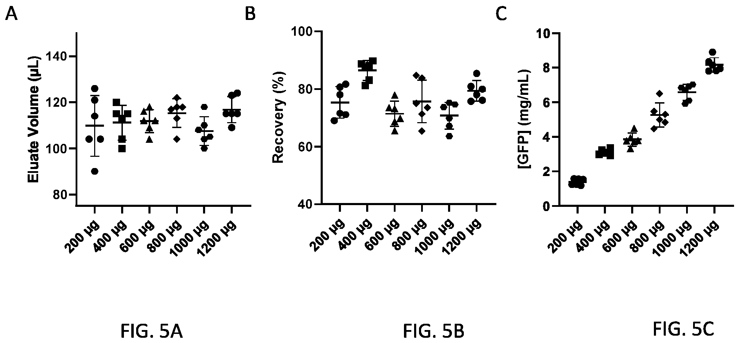

The buffers used for this purification were 50 mM HEPES, 500 mM NaCl, pH 7.5 (Buffer A), 50 mM HEPES, 500 mM NaCl, 15 mM imidazole, pH 7.5 (Buffer B), and 500 mM HEPES, 500 mM NaCl, 500 mM imidazole, pH 7.5 (Buffer C). The steps for purification were as follows:
1. 2 x 250 µL equilibrations in Buffer A with a 30 second delay after each dispense
2. 6 x ~250 µL sample bindings with a 10 second delay after each dispense. Two dispense steps (~500 µL total) constitute a single sample binding cycle.
3. 3 x 250 µL wash in Buffer B with a 10 second delay after each dispense.
4. 3 x 250 µL wash in Buffer A with a 30 second delay after each dispense.
5. 1 x 225 µL elution in Buffer C with a 30 second delay after the elution dispense (200 µL plunger movement).
6. 1 x 140 µL chaser step (140 µL plunger movement) in with a 60 second delay after moving to the collection plate.
Eluted material was gathered in a 96-well plate and the final amount of a recombinant his-tagged fluorescent protein purified from a cell lysate was measured using a UV-vis spectrometer (Abs_{280 nm}) and a fluorimeter (λ_{Ex}: 500 nm and λ_{Em}: 525 nm). The purity of the product was determined using SDS-PAGE analysis (**FIG**. **4A-4B**). Total run time for this method was 72 minutes. Elution volumes averaged 108 ± 6.2 µL -117 ± 5.7 µL across the tested concentration range. Protein recoveries varied from 70.7 ± 4.7 - 86.4 ± 3.5% across the tested concentration range. Elution concentrations scaled with increasing load amounts and final protein concentrations varied from 1.39 ± 0.18 - 8.16 ± 0.42 mg/mL. Volumes, recoveries, and eluate concentrations for all samples are shown in **FIG. 5A, 5B and 5C****,** respectively.

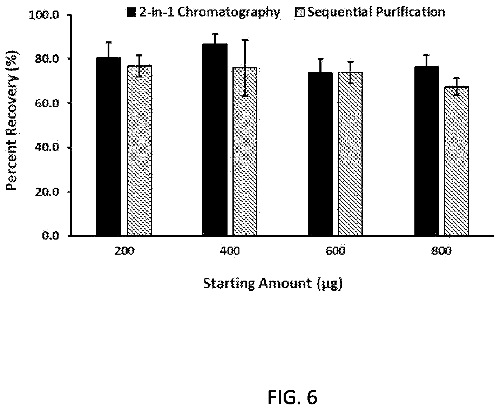

To compare against sequential processes, a similar experiment was run, first using tips containing 25 µL of Ni resin in a dispersive solid phase extraction (dSPE) format as previously described, and then running the elution through a commercially available buffer exchange tip (SizeX₁₅₀). Differences in the experiment include fewer total amounts of GFP used (200, 400, 600, and 800 µg), a larger buffer exchange resin bed, and the overall sample volume (825 µL instead of 1 mL). Protocols for affinity purification followed by buffer exchange are well established in the art and represent the standard in efficiency in providing purified protein in a desired final buffer. Overall, the sequential method took 90 minutes and resulted in similar yields and purities to the 2-in-1 purification with a statistically significant (*p*-value < 0.05) improvement observed in the 2-in-1 purification for the 800 µg sample load (**FIG. 6**). Both methods consistently resulting in >70% protein recovery with >96% purity. The 2-in-1 chromatography approach, however, was 18 minutes (20%) shorter than the sequential method and offers added advantages in a more concentrated final sample.

### Example 2: Purification and Buffer Exchange of Varying Concentrations of Polyclonal Human IgG from Cell Lysate using 2-in-1 Chromatography on a Hamilton^{®} STAR Automated Liquid Handling System

In this example, a polyclonal human IgG (IgG) (Immunoreagents Inc., Raleigh, NC) (MW~ 150 kDa), was used to demonstrate that different analytes, resins, and resin amounts could be paired with buffer exchange. Methodology for measuring the starting concentration and overall recovery of IgG was as described in Example 1 with a few exceptions. In this example, the material used as a sample load was varied between 0.20 and 3.0 mg of IgG in 1x PBS. Initial concentration of IgG was determined by NanoDrop 2000 using an E1% of 13.7. Instead of 25 µL of Ni resin, in this example 50 µL of a protein A (proA) resin (PrismA, Cytiva) was used as the top resin (CR2). Additionally, all tips used in this example were of the type referred to as Format 4 as described in Example 1 and illustrated in **FIG. 1D****.**

Protein A-based purification of Fc-domain containing moieties is a ubiquitous technique in the biopharmaceutical industry. Typically, the elution step involves exposure to a low pH (≤ 3.5) solution that can cause less stable monoclonal antibodies (mAb), bispecific antibodies, or Fc-fusion proteins to either aggregate or breakdown into smaller fragments. Extended exposure or storage at such conditions has been shown to have deleterious effects on proteins of interest. As such, typical purifications are followed by a buffer exchange step or a rapid neutralization step. With this in mind, the 2-in-1 chromatography approach was employed so that when an Fc-containing moiety is eluted from the protein A resin, it immediately begins the buffer exchange process in the lower portion of the tip.

Similarly to Example 1, samples followed a bind, wash, elute, chase process with the elution step serving as the "sample loading" step for the buffer exchange part of the tip. For initial testing, variable amounts of polyclonal IgG (200-3000 µg) were spiked into 1 mL of PBS and used as the sample.

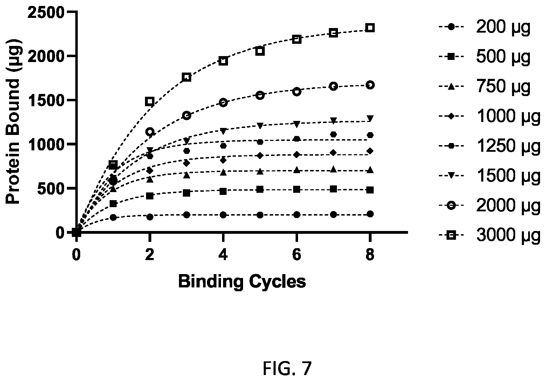

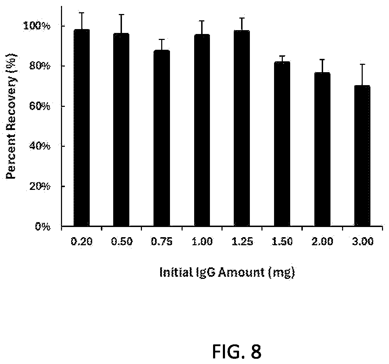

The automated workflow was similar to that described in Example 1 with the following exceptions: the equilibration and wash buffers were both 1 x PBS, there were eight sample binding cycles, and the elution buffer was a 0.1 M sodium acetate, pH 3 buffer. Flow through was measured after each sample pass to generate a binding curve (**FIG. 7**). Proteins were eluted with 100 µL of elution buffer yielding final volumes averaging 150 ± 13 µL. Overall recoveries ranged from 97.6 ± 8.9 - 69.6 ± 11.1% across the concentration range (**FIG. 8**). For samples below 1.5 mg, all recoveries were greater than 86%. Additionally, eluted material had a pH of 7.2, consistent with a buffer exchange process. Removal of an additional wash step lowered the overall time of the 2-in-1 method to 60 minutes.

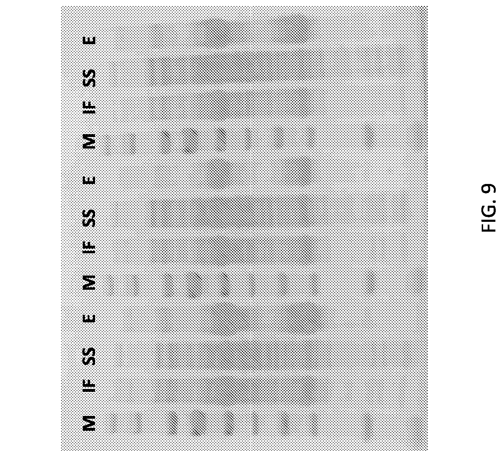

In a second antibody purification experiment, the optimized protocol was employed to purify a monoclonal antibody (mAb) from CHO media. Previous measurements had identified the mAb titer to be 1.4 mg/mL. Similar to the above-described first experiment with polyclonal IgG, recoveries average 79.5 ± 11.3% (*n*=8) with an average collected volume of 147 ± 15 µL. SDS-PAGE analysis was consistent with minimal contaminating material in the eluted sample (**FIG. 9**) and a strong intensification of IgG-related bands.

### Example 3: Concentration and Buffer Exchange of Varying Concentrations of His₆-tagged Protein using 2-in-1 Chromatography on a Hamilton^{®} STAR Automated Liquid Handling System

In this example, GFP was used at an acidic pH to show that by combining an ion-exchange resin and buffer exchange resin, a sample could be concentrated and buffer exchanged in one step. Ion-exchange resins rapidly interact with oppositely-charged species at on-rates approaching diffusion. The difference in these on-rates suggested that fewer binding steps could be utilized to fully capture target analytes. In this example, concentrations of GFP between 0.2 mg/mL and 1.5 mg/mL were used with sample volumes of 1 mL. Samples were pushed through the column either two or three times which showed to be an adequate length to achieve near quantitative capture.

The methodology for measuring the starting concentration and overall recovery of GFP was like that described in Example 1. Instead of 25 µL of Ni resin, in this example 50 µL of a cation-exchange resin (Macro-Prep High S, BioRad) was used as the top resin (CR2). Additionally, all tips used in this example were of the type referred to as Format 4 as described in Example 1.

The overall workflow for the concentration and buffer exchange of analytes of interest was similar to that described in Example 1 with several exceptions. The equilibration buffer and wash buffer (Buffer A) for this set of experiments was a 50 mM potassium acetate, 50 mM NaCl, pH 5.5 buffer. The elution buffer (Buffer B) was 50 mM potassium acetate, 2 M NaCl, pH 8.1. When using a cation exchange resin, the equilibration and wash buffers should be 1 pH unit below the pI/pKa of the analyte of interest, while the elution buffer should be 1 pH unit above the pI/pKa. Inversely, when using anion exchange resins, the equilibration and wash buffers should be 1 pH unit above the pI/pKa of the analyte of interest, while the elution buffer should be 1 pH unit above the pI/pKa.
1. 2 x 300 µL equilibrations in Buffer A with a 30 second delay after each dispense
2. 4-6 x ~500 µL sample bindings with a 10 second delay after each dispense. Two dispense steps (1000 µL total) constitute a single sample binding cycle.
3. 3 x 300 µL wash in Buffer A with a 10 second delay after each dispense.
4. 3 x 300 µL wash in Buffer A (or desired storage buffer) with a 30 second delay after each dispense.
5. Load 225 µL of buffer B on to the top of the resin bed.
6. Push the plunger the distance associate with the variable of "pre-elution dispense." Adequate plunger movements ranged from 200-225 µL without being too excessive.
7. Movement to the collection plate.
8. Push the plunger the distance associate with the variable of "chaser dispense." Adequate plunger movements ranged from 125-160 µL without being too excessive.

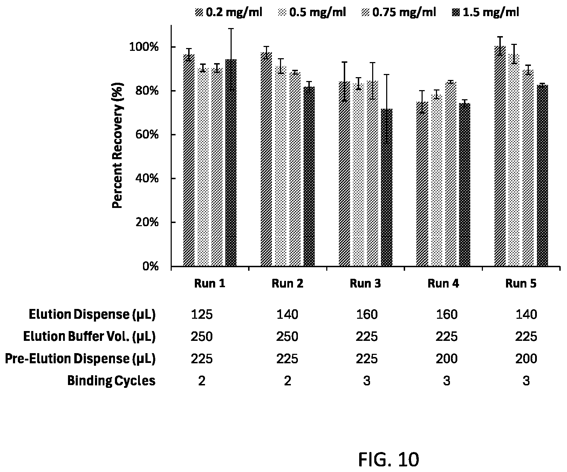

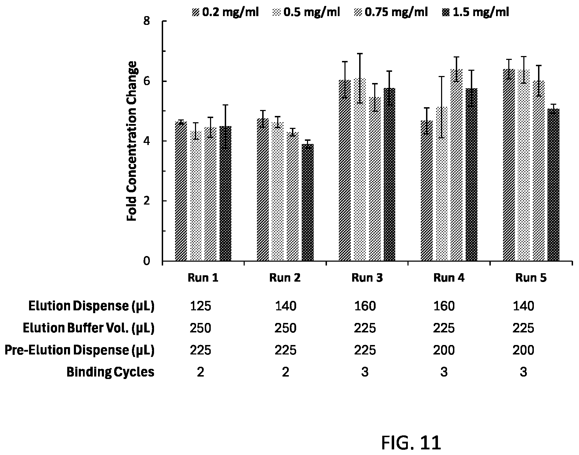

Various programming parameters were tested to result in the highest yield and lowest eluted volume (**FIG. 10**). Optimal settings consisted of 3 binding cycles, a 225-µL elution volume (Buffer B), a 200-µL pre-elution dispense plunger movement, and a 140-µL elution dispense plunger movement. Optimized parameters resulted in recoveries of 100.4 ± 4.2%, 96.8 ± 4.4%, 89.6 ± 2.1%, and 82.6 ± 0.8% (*n=*3) for starting concentrations of 0.2 mg/mL, 0.5 mg/mL, 0.75 mg/mL, and 1.5 mg/mL, respectively. Respective volumes for the eluted samples were 157 ± 4.4 µL, 152 ± 3.6 µL, 150 ± 15.6 µL, and 163 ± 6.6 µL. Eluted samples were thus concentrated 6.4 ± 0.3, 6.4 ± 0.4, 6.0 ± 0.5, and 5.07 ± 0.2 fold, respectively (**FIG. 11**). Additionally, all eluted material had a pH of 5.5, consistent with a buffer exchange process. Total time of the 2-in-1 concentration and buffer exchange method was under 60 minutes.

### Example 4: Purification and Buffer Exchange of Varying Concentrations of Polyclonal Human IgG from Cell Lysate using 2-in-1 Chromatography on a Pressure-Fitted Tecan^{®} Fluent Automated Liquid Handling System

In this example, a polyclonal human IgG (IgG) (Immunoreagents Inc., Raleigh, NC) (MW~ 150 kDa), was used to demonstrate that different analytes, resins, and resin amounts could be paired with buffer exchange. Methodology for measuring the starting concentration and overall recovery of IgG was like that described in Example 2 with a few exceptions. In this example, the material used as a sample load was varied between 0.17 and 2.8 mg of IgG in 1x PBS. Initial concentration of IgG was determined by NanoDrop 2000 using an E1% of 13.7.

All tips used in this example were of the type referred to as Format 4 as described in Example 1, but were tips designed for the Tecan^{®} Fluent system. Since the tips for this experiment were narrower than the previously utilized Hamilton tips, tip design incorporated a porous filter (first PF3) with a diameter on the smaller side 0.178"-0.180" of the previously reported range. The upper filter (second PF3) held the same dimensions and was placed 3 mm above the first PF3. Between the two filters was placed 50 µL of protein A (proA) resin (PrismA, Cytiva) (CR2).

Parameters on the Tecan^{®} Fluent were substantially different than those used for the Hamilton^{®} STAR platform. A distance measurement was used during plunger movement rather than a volume measurement like on the Hamilton. Additionally, speeds of plunger movement are described as a factor or percentage, as opposed to the Hamilton verbiage of µL/s.

Optimized parameters for the experiments described in this example are given in **Table 2.**

**Table 2. Optimized parameters for 50 µL of affinity resin stacked with 262.5 mg of Bio-Rad 6PDG on the Tecan^{®} Fluent.**

| **Step** | **Parameters** | | | |
|---|---|---|---|---|
| | Volume (µL) | **Position [mm/°]** | **Factor [%]** | **Hold Time, s** |
| Blowout | --- | 50 | 100 | 45 |
| Equilibration | 500 | 120 | 10 | 60 |
| Equilibration | 500 | 120 | 10 | 60 |
| Sample (x6) | 480 | 120 | 10 | 45 |
| Sample (x10) | 480 | 120 | 10 | 60 |
| Wash (x2) | 500 | 120 | 10 | 60 |
| Pre-Elution | 200 | 15 | 1 | 35 |
| Elution | --- | 50 | 2 | 75 |

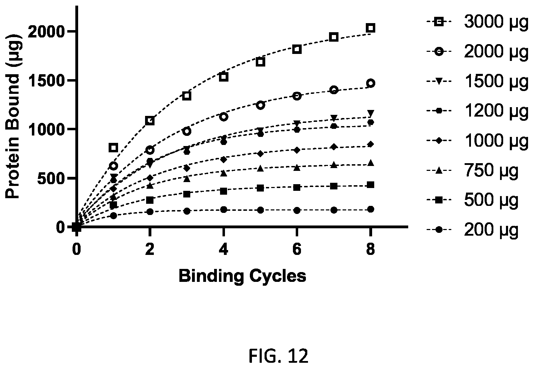

Similar to Example 2, samples followed a bind, wash, elute, chase process with the elution step serving as the "sample loading" step for the buffer exchange part of the tip. For initial testing, variable amounts of polyclonal IgG (170-2800 µg) were spiked into 1 mL of PBS and used as the sample. An initial binding curve was generated, similar to that described in Example 2. Flow through was measured after each sample pass to generate a binding curve (FIG. 12). The amount of protein bound over the eight binding cycles (170-2034 mg) was slightly lower than that observed in Example 2, however overall time of this step was also slightly lower.

After determination of a sufficient number of binding cycles by the above experiment, elution parameters were optimized. The focus of this optimization was the "pre-elution" step in which 200 µL of elution buffer is placed on top of the top frit and then slowly pushed into the column bed. Factors of 1-5% were tested with a starting IgG amount of 0.941 mg. Unbound material was not factored into the percent recovery. The lowest factor and thus slowest piston movement showed the greatest percent recovery of bound material at 85% (n=2). This parameter was then included in a complete method and a purification of a starting stock of 0.913 mg of IgG was performed. The resulting recovery (n=8) was 73 ± 7% from starting material and 88 ± 8% from bound material. The final volumes of eluted material averaged 1503 ± 7.7 µL. Additionally, eluted material had a pH of 7.2, consistent with a buffer exchange process.

In a second experiment, the optimized protocol was employed to purify a monoclonal antibody (mAb) from CHO media. Previous measurements had identified the mAb titer to be 1.4 mg/mL. As in Example 2, recoveries averaged 79.9 ± 1.7% (*n*=6) with an average collected volume of 151 ± 1.2 µL. SDS-PAGE analysis was consistent with minimal contaminating material in the eluted sample and a strong intensification of IgG-related bands.

### Example 5: Concentration and Buffer Exchange of Varying Concentrations of His₆-tagged Protein using 2-in-1 Chromatography on a Pressure-Fitted Tecan^{®} Fluent Automated Liquid Handling System

In this example, GFP was used at an acidic pH to show that by combining an ion-exchange resin and buffer exchange resin, a sample could be concentrated and buffer exchanged in one step. The workflow described in this example is similar to that used in Example 1, with the primary difference being that the automated liquid handler is a pressure-fit Tecan^{®} Fluent rather than the "zero-pressure" CO-RE-based Hamilton^{®} STAR.

In this example, concentrations of GFP between 0.2 mg/mL and 1.5 mg/mL were used with sample volumes of 1 mL. Samples were pushed through the column either two or three times which showed to be an adequate length to achieve near quantitative capture. Methodology for measuring the starting concentration and overall recovery of GFP was like that described in Example 3. Similar to Example 3. in this example 50 µL of a cation-exchange resin (Macro-Prep High S, BioRad) was used as the top resin (CR2). Additionally, all tips used in this example were of the construction type referred to as Format 4 as described in Example 1. As this was performed on a Tecan^{®} Fluent, the specific setup of the tip frits and heights was like that described in Example 4.

In this example, three combinations of resin amounts were used to show the adaptability of this workflow; namely, 262.5 mg of swollen Bio-Gel P-6DG from Bio-Rad and 50 µL of a cation-exchange resin (Macro-Prep High S, BioRad) (referred to in this example as Configuration 1), 350 mg of swollen Bio-Gel P-6DG from Bio-Rad and 50 µL of a cation-exchange resin (Macro-Prep High S, BioRad) (referred to in this example as Configuration 2), and 350 mg of swollen Bio-Gel P-6DG from Bio-Rad and 75 µL of a cation-exchange resin (Macro-Prep High S, BioRad) (referred to in this example as Configuration 3).

Optimized parameters for each resin combination are shown below in **Tables 3-5.**

**Table 3. Optimized parameters for (1) 50 µL of Macro-Prep High S resin stacked with 262.5 mg of Bio-Rad 6PDG on the Tecan Fluent.**

| **Step** | **Volume (µL)** | **Position [mm/°]** | **Factor [%]** | **Hold Time, s** |
|---|---|---|---|---|
| Blowout | --- | 50 | 100 | 45 |
| Equilibration | 450 | 120 | 10 | 35 |
| Equilibration | 450 | 120 | 10 | 25 |
| Sample | 470 | 120 | 10 | 45 |
| Wash | 500 | 70 | 10 | 40 |
| Wash | 500 | 70 | 10 | 40 |
| Pre-elution | 200 | 13 | 3 | 35 |
| Elution | --- | 25 | 3 | 70 |

**Table 4. Optimized parameters for (2) 50 µL of Macro-Prep High S resin stacked with 350 mg of Bio-Rad 6PDG on the Tecan Fluent.**

| **Step** | **Volume (µL)** | **Position [mm/°]** | **Factor [%]** | **Hold Time, s** |
|---|---|---|---|---|
| Blowout | --- | 50 | 100 | 45 |
| Equilibration | 450 | 120 | 100 | 65 |
| Equilibration | 450 | 120 | 100 | 65 |
| Sample | 470 | 120 | 10 | 60 |
| Wash | 500 | 120 | 10 | 60 |
| Wash | 500 | 120 | 10 | 60 |
| Pre-elution | 250 | 27 | 3 | 30 |
| Elution | --- | 45 | 3 | 60 |

**Table 5. Optimized parameters for (3) 75 µL of Macro-Prep High S resin stacked with 350 mg of Bio-Rad 6PDG on the Tecan Fluent.**

| **Step** | **Volume (µL)** | **Position [mm/°]** | **Factor [%]** | **Hold Time, s** |
|---|---|---|---|---|
| Blowout | --- | 50 | 100 | 45 |
| Equilibration | 450 | 120 | 100 | 65 |
| Equilibration | 450 | 120 | 100 | 65 |
| Sample | 470 | 120 | 10 | 65 |
| Wash | 500 | 120 | 10 | 65 |
| Wash | 500 | 120 | 10 | 65 |
| Pre-elution | 250 | 33 | 3 | 30 |
| Elution | --- | 50 | 3 | 70 |

An additional difference between the tips used in the varied combinations in this example is that tips used in Configuration 2 and Configuration 3 required the slightly larger diameter (0.180") internal and top frit, whereas Configuration 1 used the smaller diameter (0.178") frit for both positions.

Buffers used were consistent with those used in Example 3; namely, the equilibration buffer and wash buffer (Buffer A) for this set of experiments was a 50 mM potassium acetate, 50 mM NaCl, pH 5.5 buffer and the elution buffer (Buffer B) was 50 mM potassium acetate, 2 M NaCl, pH 8.1. The workflow for this process was also similar, with several exceptions. All parameters controlling volume transferred, plunger movement (dispense), and the speed of dispense are given in the above tables.
1. An initial blowout of storage solution using parameters consistent with the tables above.
2. 2 x 450 µL equilibrations in Buffer A with a delay after each dispense consistent with those shown in the above tables.
3. 4-6 x ~470 µL sample bindings with a delay after each dispense. Two dispense steps (940 µL total) constitute a single sample binding cycle.
4. 2 x 500 µL wash in Buffer A with a delay after each dispense.
5. Load a variable amount (200-250 µL) of Buffer B on to the top of the resin bed.
6. Push the plunger the distance associate with the variable of "pre-elution dispense."
7. Movement to the collection plate.
8. Push the plunger the distance associate with the variable of "elution." Adequate plunger movements ranged from 25-50 without being too excessive.

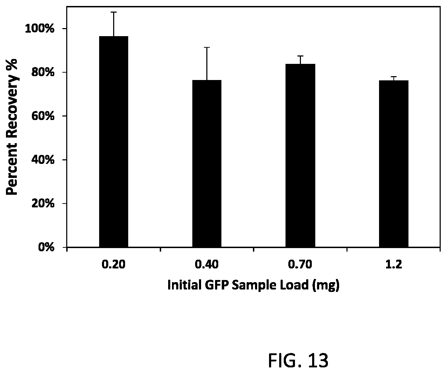

In Configuration 1, optimal settings consisted of 3 binding cycles, a 200-µL elution volume (Buffer B), a 13 mm pre-elution dispense plunger movement, and a 25 mm elution dispense plunger movement. Optimized parameters resulted in recoveries of 96.4 ± 11.1%, 76.4 ± 15.0%, 83.8 ± 3.8%, and 76.3 ± 1.7% (*n=*4) for starting concentrations of 0.15 mg/mL, 0.45 mg/mL, 0.66 mg/mL, and 1.14 mg/mL, respectively. Respective volumes for the eluted samples were 128 ± 6.8 µL, 117 ± 15.4 µL, 131 ± 4.1 µL, and 130 ± 6.9 µL. Eluted samples were thus concentrated 7.5 ± 0.5, 6.5 ± 0.5, 6.4 ± 0.2, and 5.9 ± 0.3 fold respectively (**FIG. 13**). Additionally, all eluted material had a pH of 5.5, consistent with a buffer exchange process. Total time of the 2-in-1 concentration and buffer exchange method was under 30 minutes.

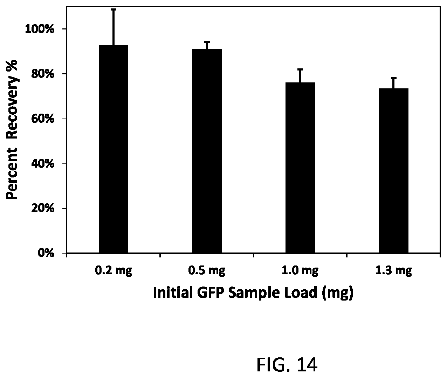

In Configuration 2, optimal settings consisted of 3 binding cycles, a 250-µL elution volume (Buffer B), a 27 mm pre-elution dispense plunger movement, and a 45 mm elution dispense plunger movement. Optimized parameters resulted in recoveries of 92.8 ± 15.9%, 90.9 ± 3.2%, 76.2 ± 5.8%, and 73.5 ± 4.7% (*n=*4) for starting concentrations of 0.17 mg/mL, 0.46 mg/mL, 0.95 mg/mL, and 1.24 mg/mL, respectively. Respective volumes for the eluted samples were 129 ± 5.3 µL, 131 ± 7.8 µL, 136 ± 7.2 µL, and 135 ± 9.8 µL. Eluted samples were thus concentrated 7.3 ± 1.1, 7.1 ± 0.4, 5.7 ± 0.2, and 5.6 ± 0.7 fold respectively (**FIG. 14**). As in previous experiments, all eluted material had a pH of 5.5, consistent with a buffer exchange process. Total time of the 2-in-1 concentration and buffer exchange method remained under 30 minutes.

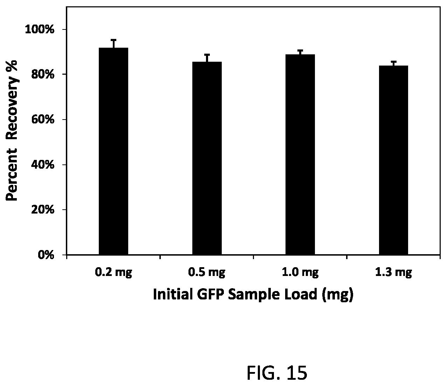

In Configuration 3, optimal settings consisted of 3 binding cycles, a 250-µL elution volume (Buffer B), a 33 mm pre-elution dispense plunger movement, and a 50 mm elution dispense plunger movement. Optimized parameters resulted in recoveries of 91.7 ± 3.6%, 85.5 ± 3.3%, 88.8 ± 1.8%, and 83.8 ± 2.0% (*n=*4) for starting concentrations of 0.19 mg/mL, 0.51 mg/mL, 1.03 mg/mL, and 1.33 mg/mL, respectively. Respective volumes for the eluted samples were 139 ± 4.8 µL, 137 ± 7.0 µL, 148 ± 3.6 µL, and 145 ± 11.5 µL. Eluted samples were thus concentrated 6.7 ± 0.3, 6.4 ± 0.4, 6.1 ± 0.2, and 5.9 ± 0.5 fold respectively (**FIG. 15**). The recoveries from Configuration 3 were the highest and most consistent of the three, although this was largely due to the limited capacity of the cation exchange resin used. As in previous experiments, all eluted material had a pH of 5.5, consistent with a buffer exchange process. Total time of the 2-in-1 concentration and buffer exchange method remained under 30 minutes.

### Example 6: Purification and Desalting of His₆-tagged Protein from Cell Lysate using 2-in-1 Chromatography on a Filter Plate

In this example, the 2-in-1 chromatography system was demonstrated in a filter plate usable via a centrifuge or positive pressure. Different embodiments of the filter plate format of the 2-in-1 chromatography system are illustrated schematically in **FIG. 2A-2C****.** In the format of **FIG. 2A****,** the lower chromatography resin, CR1, is positioned above the lower permeable barrier (LPB) and the upper chromatography resin, CR2, is positioned above CR1. In the format of **FIG. 2B****,** CR1 is positioned above the LPB, CR2 is positioned above CR1 and a porous filter, PF4, is positioned above CR2. In the format of **FIG. 2C****,** CR1 is positioned above the LPB, CR2 is positioned above CR1 and the porous filter, PF4, is positioned both between CR1 and CR2 and above CR2.

In the experiments described in this example, a 2-in-1 chromatography system filter plate having the format shown schematically in **FIG. 2A** was used. A recombinant his-tagged protein was purified from bacterial cell lysate. Methodology for quantification and qualification of purity was as described in Example 1. Additionally, to measure residual small molecule contaminants (imidazole), eluted material was loaded onto a Thermo Fisher Vanquish UHPLC with a UV-detector and separated using an Agilent AdvanceBio SEC 300 Å, 2.7 µm 7.8x300 mm column. The residual imidazole peak was measured at 214 nm and compared to a standard curve for quantification.

Overall workflows for this example followed those of the tip-based systems. Briefly, iterative steps included an equilibration step, a sample binding step, several wash steps, the final of which would serve as the equilibration for the buffer exchange resin, and then a final elution step. Instead of a tip comprised of layers of resins separated by internal frits, the layered resins are placed in a filter plate, equipped with a bottom membrane whose porosity can range from 1.2-25 µm. Total volume of plates tested varied from 1 mL-2 mL with round-well plates being more preferable than square-well plates. In this example, a 1 mL filter plate containing a 1.2 µm Supor^{®} membrane filter was used as the base plate.

Plates were constructed by layering 15-25µL of Ni resin (CR2) on top of between 100-190 mg (wet mass) of swollen Bio-Gel P-6DG (CR1) from Bio-Rad. Pre-swollen resin was spun down at 750 xg for 30 seconds prior to layering with Ni resin. After Ni resin was layered, the plate was spun down for an additional 30 seconds at 750 xg.

As in Example 1, the buffers used for this purification were 50 mM HEPES, 500 mM NaCl, pH 7.5 (Buffer A), 50 mM HEPES, 500 mM NaCl, 15 mM imidazole, pH 7.5 (Buffer B), and 500 mM HEPES, 500 mM NaCl, 500 mM imidazole, pH 7.5 (Buffer C). The steps for purification were as follows:
1. 3 x 625 µL equilibration of Buffer A spun down at 750 xg for 1 minute.
2.7 x 400-500 µL sample bindings each spun down for 3 minutes at 20 xg
3. 3 x 625 µL wash in Buffer B spun down at 750 xg for 1 minute.
4. 1 x 625 µL wash in Buffer A spun down at 400 xg for 1 minute.
5. 1 x 100 µL elution in Buffer C spun down at 1000 xg for 1 minute.

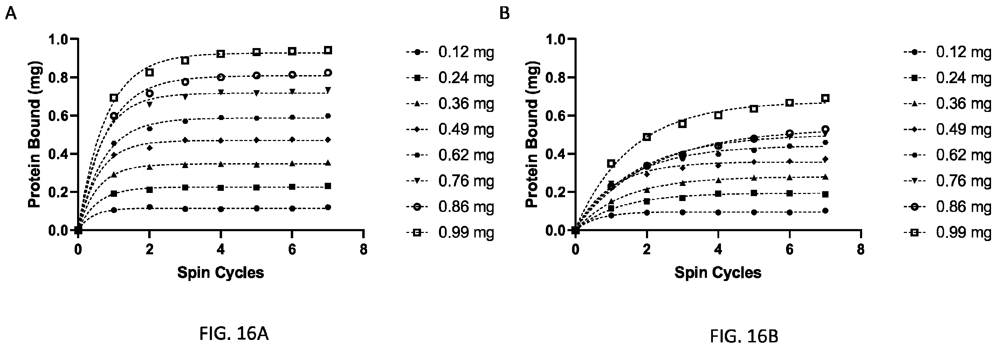

Required binding steps were dependent upon the sample load and the amount of Ni resin layered. As is shown in the binding curves in **FIG. 16A-16B****,** binding of up to 1 mg of his-tagged protein was nearly complete after 3 binding cycles (step 2) and complete after 4 when 25 µL of Ni resin was used. When 15 µL of resin was used, lower protein loads (< 0.4 mg) were captured at ~5 binding cycles while 7 cycles still saw increasing amounts of protein bound at higher protein loads (≥0.5 mg).

In a full example of this workflow, 400 µL of a 1.12 mg/mL solution of his-tagged recombinant protein (GFP) was purified from bacterial lysate using a 2-in-1 chromatography resin bed consisting of 15 µL of Ni resin on top of 131 mg of swollen Bio-Gel P-6DG. Purification was performed as detailed above with two exceptions; namely, eight sample binding cycles were employed and the 100 µL of Buffer C was allowed to rest on top of the resin bed for 2 minutes prior to the 1000 xg centrifugation step. Yields for the overall material were 80 ± 5% (n=4) with recovery of bound material at 80 ± 6%. Recovered eluted totaled 111 ± 4 µL. Eluted material was then analyzed for residual imidazole via an analytical UHPLC with UV-detector. Residual imidazole was determined to be 7.7 ± 0.8 mM, a reduction of 98.5% (500 mM) from Buffer C.

In an additional example of this workflow, 600 µL of a 1.12 mg/mL solution of his-tagged recombinant protein (GFP) was purified from bacterial lysate using a 2-in-1 chromatography resin bed consisting of 25 µL of Ni on top of 262.5 mg of swollen Bio-Gel P-6DG. In this example, a square, 2-mL filter plate was utilized. Purification was performed as detailed above with three exceptions; namely, 600 µL of sample volume was used in each sample binding step, sample binding was composed of seven sample binding cycles and one additional cycle in which no sample was added, and the 100 µL of Buffer C was allowed to rest on top of the resin bed for 2 minutes prior to the 1000 xg centrifugation step. Yields for the overall material were 66 ± 3% (n=4) with recovery of bound material at 73 ± 2%. Recovered eluted totaled 130 ± 3 µL. Eluted material was then analyzed for residual imidazole via an analytical UHPLC with UV-detector. Residual imidazole was determined to be 17.2 ± 2.4 mM, a reduction of 96.5% (500 mM) from Buffer C.

### Example 7: Concentration and Desalting of His₆-tagged Protein from Buffered Stock using 2-in-1 Chromatography on a Spin Column

In this example, the 2-in-1 chromatography approach was demonstrated in a spin column usable via a centrifuge. A recombinant his-tagged protein was bound, eluted, and concentrated from a PBS stock solution. Spin columns were constructed the same way as the pipette tips described in Example 1. Spin columns contained 50 µL of a nickel chelating agarose resin (Ni Sepharose 6 Fast Flow from Cytiva) (CR2), and 262.5 mg (wet mass) of swollen Bio-Gel P-6DG from Bio-Rad (CR1). Methodology for quantification and qualification of purity was as described in Example 1.

The overall workflow for this example blended the workflows discussed in Examples 1 and 6. In this example, the spin column was comprised of a 1-mL wide-bore Hamilton tip with construction described in Example 1. Tip adapters allowing for the placement of the 1-mL spin column over 15-mL conical tubes were 3-D printed. Similarly, large numbers of tips (up to 96 per rack) could be placed in a Hamilton wafer affixed to a 3-D printed adapter connected to a 96-well deepwell plate or 300 mL reagent trough and spun in a centrifuge.

In this example, the buffers used for this purification were 1 x phosphate buffered saline (Buffer A) and 50 mM sodium phosphate, 150 mM NaCl, 500 mM imidazole, pH 8.0 (Buffer B). The steps for purification were as follows:
1. 2 x 500 µL equilibration of Buffer A spun down at 200 xg for 1 minute.
2. 4-5 x sets of 500 µL sample bindings each spun down for 1 minute at 200 xg. (A single set for a 1-mL sample was comprised of two sequential 500 µL sample loads).
   Optional: For lysate-derived sample or impure source material, an additional wash containing a reagent to reduce non-specific binding or weak binding (i.e. high [NaCl] or 10 mM imidazole) could be performed at 2 x 500 µL spun down at 200 xg for 1 minute.
3. 2 x 500 µL wash in Buffer A spun down at 200 xg for 1 minute.
4. 1 x 100 µL elution in Buffer B spun down at 5 xg for 1 minute. (New collection tube)
5. A follow up spin at 200 xg for 1 minute.

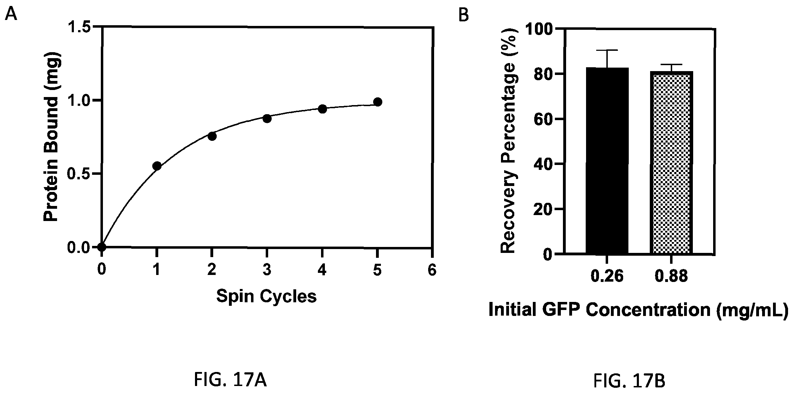

Required binding steps were dependent upon the sample load and the amount of Ni resin layered. In initial work using 1.11 mg/mL of GFP, it was demonstrated that 5 sample binding steps were sufficient to bind 90% of the material **(****FIG. 17A****).** In a full example of this workflow, 1000 µL of both a 0.26 mg/mL and a 0.88 mg/mL solution of his-tagged recombinant protein (GFP) were bound, eluted, and concentrated. In the case of the 0.88 mg/mL solution, 81.5 ± 3.1 % of the material was recovered with a final volume of 111 ± 3 µL, whereas in the case of the 0.26 mg/mL solution, 81.9 ± 7.8 % of the material was recovered with a final volume of 109 ± 2 µL **(****FIG. 17B****).** When bromophenol blue was added to the elution buffer (Buffer B) to the final concentration of 0.1 mg/mL, eluted material had no detectable absorbance at 595 nm using the NanoDrop2000. Standard curves for bromophenol blue had been run to a dilution of 128-fold, suggesting that an eluted product below the limit of quantitation represents a removal greater than 99% of small molecules in the elution buffer. Additionally, eluted material was determined to have a pH of 7.3, consistent with the pH of the buffer used to re-equilibrate the buffer exchange component of the spin column in step 3 detailed above.
Aspects of the invention include the following:
1. A 2-in-1 chromatography system comprising:
   a housing having a distal end with an upper opening adapted to receive a liquid sample and a proximal end with a lower opening adapted for passage of the liquid sample;
   a first chromatography resin (CR1) positioned within the housing above the lower opening;
   a second chromatography resin (CR2) positioned within the housing above CR1 and beneath the upper opening; and
   a lower permeable barrier (LPB) positioned beneath CR1;
   wherein CR1 and CR2 each independently comprise a resin bed having a volume of 10-2000 µL; and
   wherein CR1 and CR2 are different resins.
2. The 2-in-1 chromatography system of aspect 1, which further comprises a first porous filter (PF1) positioned between CR1 and CR2.
3. The 2-in-1 chromatography system of aspect 1, which further comprises a first porous filter (PF1) positioned above CR2 and beneath the upper opening.
4. The 2-in-1 chromatography system of aspect 2, which further comprises a second porous filter (PF2) positioned above CR2 and beneath the upper opening.
5. The 2-in-1 chromatography system of aspect 1, which comprises a pipette tip, a filter plate, a spin chromatography column or a mini-chromatography column.
6. The 2-in-1 chromatography system of aspect 1, which comprises:
   a columnar housing having a distal end with an upper opening adapted to receive a liquid sample and a proximal end with a lower opening adapted for passage of the liquid sample;
   a first chromatography resin (CR1) positioned within the housing above the lower opening;
   a second chromatography resin (CR2) positioned within the housing above CR1 and beneath the upper opening;
   a first porous filter (PF1) positioned between CR1 and CR2; and
   a lower permeable barrier (LPB) positioned beneath CR1;
   wherein CR1 and CR2 each independently comprise a resin bed having a volume of 10-2000 µL; and
   wherein CR1 and CR2 are different resins.
7. The 2-in-1 chromatography system of aspect 6, which further comprises a second porous filter (PF2) positioned above CR2 and beneath the upper opening.
8. The 2-in-1 chromatography system of aspect 6, which further comprises a space above CR2 and beneath the upper opening.
9. The 2-in-1 chromatography system of any one of aspects 6-8, which comprises a pipette tip, a spin chromatography column or a mini-chromatography column.
10. The 2-in-1 chromatography system of any one of aspects 6-9, wherein PF1 positioned between CR1 and CR2 has a diameter in a range of 0.17 to 0.19 inches.
11. The 2-in-1 chromatography system of aspect 10, wherein PF1 has a diameter of 0.18 inches.
12. The 2-in-1 chromatography system of aspect 10, wherein PF1 has a diameter in a range of 0.178 to 0.184 inches.
13. The 2-in-1 chromatography system of aspect 12, wherein PF1 has a diameter of 0.184 inches.
14. The 2-in-1 chromatography system of any one of aspects 6-13, wherein PF1 has a porosity of 60-80 microns.
15. The 2-in-1 chromatography system of aspect 14, wherein PF1 has a porosity of 80 microns.
16. The 2-in-1 chromatography system of aspect 14, wherein PF1 has a porosity of 60 microns.
17. The 2-in-1 chromatography system of any one of aspects 6-16, wherein PF1 has a thickness in a range of 0.05 to 0.10 inches.
18. The 2-in-1 chromatography system of aspect 17, wherein PF1 has a thickness of 0.055 inches.
19. The 2-in-1 chromatography system of any one of aspects 6-18, wherein PF1 is positioned 25 to 27 millimeters (mm) above the lower opening.
20. The 2-in-1 chromatography system of aspect 19, wherein PF1 is positioned 27 mm above the lower opening.
21. The 2-in-1 chromatography system of any one of aspects 6-20, wherein the housing is dimensioned to fit a liquid sample having a volume of 25-1000 µL.
22. The 2-in-1 chromatography system of aspect 21, wherein the housing is dimensioned to fit a liquid sample having a volume of 100 µL.
23. The 2-in-1 chromatography system of aspect 21, wherein the housing is dimensioned to fit a liquid sample having a volume of 150 µL.
24. The 2-in-1 chromatography system of aspect 6, wherein the housing has a volume in a range of 0.5 to 2 mL.
25. The 2-in-1 chromatography system of aspect 24, wherein the housing has a volume of 1 mL.
26. The 2-in-1 chromatography system of any one of aspects 6-25, wherein CR1 and CR2 are resins comprised of a matrix independently selected from the group consisting of agarose, cross-linked dextrose, cellulose, polyacrylamide, polystyrene, Sepharose^{™} and Sephadex^{™}.
27. The 2-in-1 chromatography system of any one of aspects 6-25, wherein CR1 and CR2 are resins independently selected from the group consisting of size exclusion chromatography resins, ion exchange chromatography resins, affinity chromatography resins, mixed modal resins and hydrophobic interaction resins.
28. The 2-in-1 chromatography system of aspect 27, wherein CR2 is a cation exchange chromatography resin and CR1 is a size exclusion chromatography resin.
29. The 2-in-1 chromatography system of aspect 27, wherein CR2 is an affinity chromatography resin and CR1 is a size exclusion chromatography resin.
30. The 2-in-1 chromatography system of aspect 29, wherein CR2 is a Protein A affinity resin.
31. The 2-in-1 chromatography system of aspect 29, wherein CR2 is an immobilized metal affinity resin.
32. The 2-in-1 chromatography system of any one of aspects 6-31, wherein PF1 is composed of a material selected from the group consisting of polyethylene (PE), polypropylene (PP), cellulose, modified cellulose, nitrocellulose (NC), cellulose acetate, nylon, polystyrene, polyethersulfone and porous metal.
33. The 2-in-1 chromatography system of aspect 7, wherein PF2 is composed of a material selected from the group consisting of polyethylene (PE), polypropylene (PP), cellulose, modified cellulose, nitrocellulose (NC), cellulose acetate, nylon, polystyrene, polyethersulfone and porous metal.
34. The 2-in-1 chromatography system of aspect 33, wherein PF1 and PF2 are composed of the same material.
35. The 2-in-1 chromatography system of aspect 33, wherein PF1 and PF2 are composed of different materials.
36. The 2-in-1 chromatography system of any one of aspects 6-35, wherein the lower permeable barrier (LPB) is selected from the group consisting of filters, membranes, frits, screens, closures with a slit and closures with multiple slits.
37. The 2-in-1 chromatography system of any one of aspects 6-36, which comprises a pipette tip comprising a distal end with an upper opening dimensioned to fit on a liquid dispenser.
38. The 2-in-1 chromatography system of aspect 37, wherein the liquid dispenser is a manual pipettor.
39. The 2-in-1 chromatography system of aspect 37, wherein the liquid dispenser is an automated liquid handler (ALH).
40. The 2-in-1 chromatography system of aspect 39, wherein the ALH is a Hamilton^{®} ALH.
41. The 2-in-1 chromatography system of aspect 39, wherein the ALH is a Tecan^{®} ALH.
42. The 2-in-1 chromatography system of aspect 1, which comprises a filter plate comprising one or more wells, wherein each well comprises:
   a housing having a distal end with an upper opening adapted to receive a liquid sample and a proximal end with a lower opening adapted for passage of the liquid sample;
   a first chromatography resin (CR1) positioned within the housing above the lower opening;
   a second chromatography resin (CR2) positioned within the housing above CR1 and beneath the upper opening; and
   a lower permeable barrier (LPB) positioned beneath CR1, wherein the LPB comprises a membrane having a porosity in a range of 1.2 to 25 microns;
   wherein CR1 and CR2 each independently comprise a resin bed having a volume of 10-2000 µL; and
   wherein CR1 and CR2 are different resins.
43. The 2-in-1 chromatography system of aspect 42, wherein total volume of the filter plate is 1 to 2 mL.
44. The 2-in-1 chromatography system of aspect 42, wherein the LPB comprises a 1.2 µm Supor^{®} membrane filter.
45. The 2-in-1 chromatography system of aspect 42, wherein the filter plate comprises round wells.
46. The 2-in-1 chromatography system of aspect 42, wherein the filter plate comprises square wells.
47. The 2-in-1 chromatography system of aspect 42, wherein CR1 and CR2 are resins comprised of a matrix independently selected from the group consisting of agarose, cross-linked dextrose, cellulose, polyacrylamide, polystyrene, Sepharose^{™} and Sephadex^{™}.
48. The 2-in-1 chromatography system of aspect 42, wherein CR1 and CR2 are resins independently selected from the group consisting of size exclusion chromatography resins, ion exchange chromatography resins, affinity chromatography resins, mixed modal resins and hydrophobic interaction resins.
49. The 2-in-1 chromatography system of aspect 48, wherein CR2 is a cation exchange chromatography resin and CR1 is a size exclusion chromatography resin.
50. The 2-in-1 chromatography system of aspect 48, wherein CR2 is an affinity chromatography resin and CR1 is a size exclusion chromatography resin.
51. The 2-in-1 chromatography system of aspect 50, wherein CR2 is a Protein A affinity resin.
52. The 2-in-1 chromatography system of aspect 50, wherein CR2 is an immobilized metal affinity resin.
53. A 2-in-1 chromatography system comprising:
   a pipette tip comprising:
   a housing having a distal end with an upper opening dimensioned to fit on a liquid dispenser and a proximal end with a lower opening adapted for passage of a liquid sample;
   a first chromatography resin (CR1) positioned within the housing above the lower opening;
   a second chromatography resin (CR2) positioned within the housing above CR1 and beneath the upper opening;
   a first porous filter (PF1) positioned between CR1 and CR2, wherein PF1 has a diameter in a range of 0.17 to 0.19 inches and a porosity in a range of 60 to 80 microns; and
   a lower permeable barrier (LPB) positioned beneath CR1;
   wherein CR1 and CR2 each independently comprise a resin bed having a volume of 10-2000 µL; and
   wherein CR1 and CR2 are different resins.
54. The 2-in-1 chromatography system of aspect 53, which further comprises a second porous filter (PF2) positioned above CR2 and beneath the upper opening.
55. The 2-in-1 chromatography system of aspect 53, which further comprises a space above CR2 and beneath the upper opening.
56. The 2-in-1 chromatography system of aspect 53, wherein PF1 has a diameter of 0.18 inches.
57. The 2-in-1 chromatography system of aspect 53, wherein PF1 has a diameter in a range of 0.178 to 0.184 inches.
58. The 2-in-1 chromatography system of aspect 57, wherein PF1 has a diameter of 0.184 inches.
59. The 2-in-1 chromatography system of aspect 53, wherein PF1 has a porosity of 80 microns.
60. The 2-in-1 chromatography system of aspect 53, wherein PF1 has a porosity of 60 microns.
61. The 2-in-1 chromatography system of aspect 53, wherein PF1 has a thickness in a range of 0.05 to 0.10 inches.
62. The 2-in-1 chromatography system of aspect 61, wherein PF1 has a thickness of 0.055 inches.
63. The 2-in-1 chromatography system of any one of aspects 53-62, wherein PF1 is positioned 25 to 27 millimeters (mm) above the lower opening.
64. The 2-in-1 chromatography system of aspect 63, wherein PF1 is positioned 27 mm above the lower opening.
65. The 2-in-1 chromatography system of any one of aspects 53-64, wherein the housing is dimensioned to fit a liquid sample having a volume of 25-1000 µL.
66. The 2-in-1 chromatography system of aspect 65, wherein the housing is dimensioned to fit a liquid sample having a volume of 100 µL.
67. The 2-in-1 chromatography system of aspect 65, wherein the housing is dimensioned to fit a liquid sample having a volume of 150 µL.
68. The 2-in-1 chromatography system of aspect 53, wherein the housing has a volume in a range of 0.5 to 2 mL.
69. The 2-in-1 chromatography system of any one of aspects 53-68, wherein CR1 and CR2 are resins comprised of a matrix independently selected from the group consisting of agarose, cross-linked dextrose, cellulose, polyacrylamide, polystyrene, Sepharose^{™} and Sephadex^{™}.
70. The 2-in-1 chromatography system of any one of aspects 53-68, wherein CR1 and CR2 are resins independently selected from the group consisting of size exclusion chromatography resins, ion exchange chromatography resins, affinity chromatography resins, mixed modal resins and hydrophobic interaction resins.
71. The 2-in-1 chromatography system of aspect 70, wherein CR2 is a cation exchange chromatography resin and CR1 is a size exclusion chromatography resin.
72. The 2-in-1 chromatography system of aspect 70, wherein CR2 is an affinity chromatography resin and CR1 is a size exclusion chromatography resin.
73. The 2-in-1 chromatography system of aspect 72, wherein CR2 is a Protein A affinity resin.
74. The 2-in-1 chromatography system of aspect 72, wherein CR2 is an immobilized metal affinity resin.
75. The 2-in-1 chromatography system of any one of aspects 53-74, wherein PF1 is composed of a material selected from the group consisting of polyethylene (PE), polypropylene (PP), cellulose, modified cellulose, nitrocellulose (NC), cellulose acetate, nylon, polystyrene, polyethersulfone and porous metal.
76. The 2-in-1 chromatography system of aspect 54, wherein PF2 is composed of a material selected from the group consisting of polyethylene (PE), polypropylene (PP), cellulose, modified cellulose, nitrocellulose (NC), cellulose acetate, nylon, polystyrene, polyethersulfone and porous metal.
77. The 2-in-1 chromatography system of aspect 76, wherein PF1 and PF2 are composed of the same material.
78. The 2-in-1 chromatography system of aspect 76, wherein PF1 and PF2 are composed of different materials.
79. The 2-in-1 chromatography system of any one of aspects 53-78, wherein the lower permeable barrier (LPB) is selected from the group consisting of filters, membranes, frits, screens, closures with a slit and closures with multiple slits.
80. The 2-in-1 chromatography system of any one of aspects 53-79, wherein the liquid dispenser is a manual pipettor.
81. The 2-in-1 chromatography system of any one of aspects 53-79, wherein the liquid dispenser is an automated liquid handler (ALH).
82. The 2-in-1 chromatography system of aspect 81, wherein the ALH is a Hamilton^{®} ALH.
83. The 2-in-1 chromatography system of aspect 81, wherein the ALH is a Tecan^{®} ALH.
84. A kit comprising the 2-in-1 chromatography system of any one of aspects 1-83, packaged with instructions for use.
85. The kit of aspect 84, which comprises a plurality of pipette tips.
86. The kit of aspect 85, wherein the pipette tips are adapted for use with an automated liquid handler.
87. The kit of aspect 86, wherein the ALH is a Hamilton^{®} ALH.
88. The kit of aspect 86, wherein the ALH is a Tecan^{®} ALH.
89. A method of using the 2-in-1 chromatography system of any one of aspects 1-83, the method comprising:
   applying a liquid sample at the upper opening at the distal end of the housing;
   passing the liquid sample through CR2 and CR1; and
   eluting the liquid sample at the lower opening at the proximal end of the housing.
90. The method of aspect 89, which further comprises one or more washing steps prior to eluting the liquid sample.

## Claims

1. A 2-in-1 chromatography system comprising:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1;
wherein CR1 and CR2 each independently comprise a resin bed having a volume of from 10-2000 µL; and
wherein CR1 and CR2 are different resins.

2. The 2-in-1 chromatography system of claim 1, which further comprises:
(a) a first porous filter (PF1) positioned between CR1 and CR2;
(b) a first porous filter (PF1) positioned above CR2 and beneath the upper opening; or
(c) a first porous filter (PF1) positioned between CR1 and CR2 and a second porous filter (PF2) positioned above CR2 and beneath the upper opening.

3. The 2-in-1 chromatography system of claim 2, wherein PF1:
(a) PF1 is positioned between CR1 and CR2 and has a diameter in a range of from 0.17 to 0.19 inches, such as 0.18 inches;
(b) PF1 has a porosity of from 60 to 80 microns;
(c) PF1 has a thickness in a range of from 0.05 to 0.1 inches, such as a thickness of 0.055 inches; and/or
(d) PF1 is positioned from 25 to 27 millimeters (mm) above the lower opening;
(e) PF1 is composed of a material selected from the group consisting of polyethylene (PE), polypropylene (PP), cellulose, modified cellulose, nitrocellulose (NC), cellulose acetate, nylon, polystyrene, polyethersulfone and porous metal;
(f) PF2 is composed of a material selected from the group consisting of polyethylene (PE), polypropylene (PP), cellulose, modified cellulose, nitrocellulose (NC), cellulose acetate, nylon, polystyrene, polyethersulfone and porous metal; and/or
(g) PF1 and PF2 are composed of the same material or of different materials.

4. The 2-in-1 chromatography system of any one of claims 1 to 3, which comprises a pipette tip, a filter plate, a spin chromatography column or a mini-chromatography column; and or which further comprises a space above CR2 and beneath the upper opening.

5. The 2-in-1 chromatography system of any one of the preceding claims, wherein the housing:
(a) is dimensioned to fit a liquid sample having a volume of from 25-1000 µL, such as a liquid sample having a volume of from 100 µL or 150 µL;
(b) has a volume in a range of from 0.5 to 2 mL, such as a volume of 1 mL.

6. The 2-in-1 chromatography system of any one of the preceding claims, wherein:
(a) CR1 and CR2 are resins comprised of a matrix independently selected from the group consisting of agarose, cross-linked dextrose, cellulose, polyacrylamide, polystyrene, Sepharose^{™} and Sephadex^{™}; or
(b) CR1 and CR2 are resins independently selected from the group consisting of size exclusion chromatography resins, ion exchange chromatography resins, affinity chromatography resins, mixed modal resins and hydrophobic interaction resins, optionally wherein:
(i) CR2 is a cation exchange chromatography resin and CR1 is a size exclusion chromatography resin; or
(ii) CR2 is an affinity chromatography resin, preferably a Protein A affinity resin or an immobilized metal affinity resin, and CR1 is a size exclusion chromatography resin.

7. The 2-in-1 chromatography system of any one of the preceding claims, wherein the lower permeable barrier (LPB) is selected from the group consisting of filters, membranes, frits, screens, closures with a slit and closures with multiple slits.

8. The 2-in-1 chromatography system of any one of the preceding claims, which comprises a pipette tip comprising a distal end with an upper opening dimensioned to fit on a liquid dispenser, such as a manual pipettor or an automated liquid handler (ALH), optionally wherein the liquid dispenser is a Hamilton^{®} ALH or a Tecan^{®} ALH.

9. The 2-in-1 chromatography system of claim 1 or 6, which comprises a filter plate comprising one or more wells, wherein each well comprises:
a housing having a distal end with an upper opening adapted to receive a liquid sample and a proximal end with a lower opening adapted for passage of the liquid sample;
a first chromatography resin (CR1) positioned within the housing above the lower opening;
a second chromatography resin (CR2) positioned within the housing above CR1 and beneath the upper opening; and
a lower permeable barrier (LPB) positioned beneath CR1, wherein the LPB comprises a membrane having a porosity in a range of 1.2 to 25 microns;
wherein CR1 and CR2 each independently comprise a resin bed having a volume of from 10-2000 µL; and
wherein CR1 and CR2 are different resins.

10. The 2-in-1 chromatography system of claim 9, wherein:
(a) the total volume of the filter plate is 1 to 2 mL;
(b) the LPB comprises a 1.2 µm Supor^{®} membrane filter; and/or
(c) the filter plate comprises round wells or square wells.

11. The 2-in-1 chromatography system of any one of claims 1 to 8 comprising:
a pipette tip comprising:
a housing having a distal end with an upper opening dimensioned to fit on a liquid dispenser and a proximal end with a lower opening adapted for passage of a liquid sample;
a first chromatography resin (CR1) positioned within the housing above the lower opening;
a second chromatography resin (CR2) positioned within the housing above CR1 and beneath the upper opening;
a first porous filter (PF1) positioned between CR1 and CR2, wherein PF1 has a diameter in a range of 0.17 to 0.19 inches and a porosity in a range of from 60 to 80 microns; and
a lower permeable barrier (LPB) positioned beneath CR1;
wherein CR1 and CR2 each independently comprise a resin bed having a volume of from 10-2000 µL; and
wherein CR1 and CR2 are different resins.

12. A kit comprising the 2-in-1 chromatography system of any one of claims 1 to 11, packaged with instructions for use, which kit comprises a plurality of pipette tips, spin chromatography columns, mini-chromatography columns or filter plates.

13. The kit of claim 12, which comprises a plurality of pipette tips adapted for use with an automated liquid handler, optionally wherein the ALH is a Hamilton^{®} ALH or a Tecan^{®} ALH.

14. A method of using the 2-in-1 chromatography system of any one of claims 1 to 11, the method comprising:
applying a liquid sample at the upper opening at the distal end of the housing;
passing the liquid sample through CR2 and CR1; and
eluting the liquid sample at the lower opening at the proximal end of the housing.

15. The method of claim 14, which further comprises one or more washing steps prior to eluting the liquid sample.
